(19) Europäisches Patentamt
European Patent Office
Office européen des brevets

(11) EP 2 262 853 B1

(12) **EUROPÄISCHE PATENTSCHRIFT**

(45) Veröffentlichungstag und Bekanntmachung des Hinweises auf die Patenterteilung:
**24.08.2016 Patentblatt 2016/34**

(21) Anmeldenummer: **09727911.1**

(22) Anmeldetag: **19.03.2009**

(51) Int Cl.:
***C08K 5/00*** *(2006.01)*

(86) Internationale Anmeldenummer:
**PCT/EP2009/002027**

(87) Internationale Veröffentlichungsnummer:
**WO 2009/121491 (08.10.2009 Gazette 2009/41)**

(54) **SCHLAGZÄHLMODIFIZIERTE POLYALKYLENTEREPHTHALAT/POLYCARBONAT-ZUSAMMENSETZUNGEN**

IMPACT-MODIFIED POLYALKYLENE TEREPHTHALATE/POLYCARBONATE COMPOSITIONS

COMPOSITIONS DE POLY(TÉRÉPHTALATE D'ALKYLÈNE)/POLYCARBONATE MODIFIÉES CHOC

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **29.03.2008 DE 102008016260**

(43) Veröffentlichungstag der Anmeldung:
**22.12.2010 Patentblatt 2010/51**

(73) Patentinhaber: **Covestro Deutschland AG**
**51373 Leverkusen (DE)**

(72) Erfinder:
- **MOULINIE, Pierre**
  **Imperial**
  **PA 15126 (US)**
- **HUFEN, Ralf**
  **47239 Duisburg (DE)**
- **KONRAD, Stephan**
  **41541 Dormagen (DE)**
- **WITTMANN, Dieter**
  **51375 Leverkusen (DE)**

(74) Vertreter: **Levpat**
**c/o Covestro AG**
**Alfred-Nobel-Straße 10**
**40789 Monheim am Rhein (DE)**

(56) Entgegenhaltungen:
**EP-A- 0 323 045**
**EP-A- 1 452 567**
**EP-A- 1 466 946**
**EP-A- 1 486 536**
**WO-A-01/81470**
**WO-A-01/92418**
**WO-A-03/080727**
**WO-A-2004/013227**
**WO-A-2004/020523**
**DE-A1- 19 930 527**
**US-A1- 2001 007 888**
**US-A1- 2006 074 154**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 262 853 B1

## Beschreibung

Die vorliegende Erfindung betrifft Zusammensetzungen enthaltend ein Konzentrat aus Polyalkylenterephthalat mit einem Phosphorhaltigen Additiv, die sich durch eine hohe Schmelzestabilität auszeichnen, sowie ein Verfahren zur Herstellung schlagzähmodifizierter Polyalkylenterephthalt/Polycarbonat-Zusammensetzungen, wobei ein Konzentrat aus Polyalkylenterephthalat mit einem Phosphorhaltigen Additiv eingesetzt wird.

Die Stabilisierung von Polyalkylenterephthtalaten mit Estern der Phosphorsäure ist bekannt. Die Ester der Phosphorsäure können mit noch im Polyalkylenterephthtalat enthaltenen Katalysatoren aus der Umesterung oder aus der Polykondensation reagieren, und verringern auf diese Weise einen Einflußparameter auf die Polycarbonat-Polyester-Umesterungsreaktion. Obwohl der genaue Mechanismus noch nicht bekannt ist, ist die Wirksamkeit der Stabilisierung mit Hilfe von Estern der Phosphorsäure mehrfach beschrieben worden, wie beispielsweise in "The role of phosphites in stabilization of non-polyolefin polymers ", Ashton, Henry C.; Enlow, William; Nelen, Tim., GE Specialty Chemicals, Inc., Morgantown, WV, USA, Annual Technical Conference - Society of Plastics Engineers (2000), 58th(Vol. 3), 2818-2825 oder in "*Inhibition of transreactions in condensation polymers*", James, N. R.; Mahajan, S. S.; Sivaram, S., Division of Polymer Chemistry, National Chemical Laboratory, Pune, India., Editor(s): Fakirov, Stoyko., Transreactions in Condensation Polymers (1999), 219-265; Publisher: Wiley-VCH Verlag GmbH, Weinheim, Germany.

US 4,066,617 offenbart Polyalkylenterephthalaten enthaltend Ester der Phosphorsäure mit Oxetan-Gruppen. WO 2004/007607 A offenbart polymere Phosporsäureester mit Oxetan-Gruppen. Die Verwendung von Carboxy-alkyl-phosphonsäure als Hilfsmittel zur Polyester Herstellung wird beispielsweise offenbart in US 5744572.

US 2002/0137823 offenbart Zusammensetzungen enthaltend Polyester und Ester von Phosphorsäure, die sich durch eine verbesserte Hydrolysenstabilität auszeichnen.

Phosphorsäure in niedriger Konzentration und eingesetzt als wässrige Lösung wird zur Stabilisierung von Polycarbonat/Polyester-Zusammensetzungen eingesetzt (siehe beispielsweise Beispiele 7 - 10 in US 6635698).

EP 0 294 862 A offenbart die Stabilisierung von Polycarbonat/Polyester-Zusammensetzungen mit Hilfe einer Kombination aus einem Phosphor-haltigen Stabilisator und elementarem Schwefel. EP 0 683 200 A beschreibt die Vorteile eine Stabilisierung von Polycarbonat mit Hilfe von Phosphorhaltigen Säure und Ester einer Phosphor-haltigen Säure.

Im Stand der Technik werden die Stabilisatoren in einer Konzentration von bis zu 1 bis 2 Gew.-% eingesetzt und die Stabilisatoren werden jeweils direkt der Mischung zugesetzt.

Aufgabe der vorliegenden Erfindung ist die Verbesserung der Schmelzestabilität von Polycarbonat/Polyester-Zusammensetzungen.

Es wurde nun überraschend gefunden, dass die erfindungsgemäße Aufgabe gelöst wird durch ein Konzentrat C) bestehend aus

C.1) 98 Gew.-% bis 70 Gew.-%, bevorzugt 93 Gew.-% bis 80 Gew.-% (bezogen auf die Summe der Gew.-% von C.1)+C.2)) Polyalkylenterephthalat oder einer Mischung von mindestens zwei Polyalkylenterephthalaten, bevorzugt Polyethylentherephtalat oder Polybutylenterephthalat, besonders bevorzugt Polybutylenterephthalat, und
C.2) 2 Gew.-% bis 30 Gew.-%, bevorzugt 7 Gew.-% bis 20 Gew.-% (bezogen auf die Summe der Gew.-% von C.1)+C.2)) mindestens einer Verbindung ausgewählt aus der Gruppe bestehend aus ortho-Phosphorsäure, Phosphorige Säure, Carbonsäureester der ortho-Phosphorsäure und Carbonsäureester der Phosphorigen Säure.

Gegenstand der Erfindung sind auch Zusammensetzungen enthaltend

A) aromatisches Polycarbonat,
B) Polyalkylenterephthalat, und
C) ein Konzentrat wie oben beschrieben bestehend aus C.1) und C.2).

Vorzugsweise enthalten die erfindungsgemäßen Zusammensetzungen

A) 29,8 bis 82,8 Gew.-Teile, vorzugsweise 39,5 bis 89,5 Gew.-Teile, besonders bevorzugt 44,3 bis 74,3 Gew.-Teile (jeweils bezogen auf die Summe der Gewichtsteile der Komponenten A+B+C) aromatisches Polycarbonat,
B) 15 bis 70 Gew.-Teile, vorzugsweise 20 bis 60 Gew.-Teile, besonders bevorzugt 25 bis 55 Gew.-Teile (jeweils bezogen auf die Summe der Gewichtsteile der Komponenten A+B+C) Polyalkylenterephthalat,
C) 0,2 bis 5 Gew.-Teile, bevorzugt 0,5 bis 3 Gew.-Teile, besonders bevorzugt 0,7 bis 2 Gew.-Teile (jeweils bezogen auf die Summe der Gewichtsteile der Komponenten A+B+C) eines Konzentrats bestehend aus

C.1) 98 Gew.% bis 70 Gew.-%, bevorzugt 93 Gew.% bis 80 Gew.% (bezogen auf die Summe der Gew.-% von C.1)+C.2)) Polyalkylenterephthalat oder einer Mischung von mindestens zwei Polyalkylenterephthalaten und

C.2) 2 Gew.-% bis 30 Gew.-%, bevorzugt 7 Gew.-% bis 20 Gew.-% (bezogen auf die Summe der Gew.-% von C.1)+C.2)) mindestens einer Verbindung ausgewählt aus der Gruppe bestehend aus ortho-Phosphorsäure, Phosphorige Säure, Carbonsäureester der ortho-Phosphorsäure und Carbonsäureester der Phosphorigen Säure,

D) 0 bis 40 Gew.-Teile, bevorzugt 5 bis 30 Gew.-Teile, besonders bevorzugt 8 bis 18 Gew.-Teile (jeweils bezogen auf die Summe der Gewichtsteile der Komponenten A+B+C) kautschukmodifiziertes Pfropfpolymerisat, und
E) 0 bis 20 Gew.-Teile, bevorzugt 1 bis 15 Gew.-Teile (bezogen auf die Summe der Gewichtsteile der Komponenten A+B+C = 100) Zusatzstoffe,

wobei alle Gewichtsteilangaben in der vorliegenden Anmeldung so normiert sind, dass die Summe der Gewichtsteile der Komponenten A+B+C in der Zusammensetzung 100 ergeben.
Gegenstand der Erfindung ist auch ein Verfahren zur Herstellung von Polycarbonat/ Polyalkylenterephthalat-Zusammensetzungen mit verbesserter Schmelzestabilität dadurch gekennzeichnet, dass

(i) im ersten Schritt ein Konzentrat C) hergestellt wird, wobei

(i-1) die Komponenten

C.1) 98 Gew.-% bis 70 Gew.-%, bevorzugt 93 Gew.-% bis 80 Gew.-% (bezogen auf die Summe der Gew.-% von C.1)+C.2)) einer Schmelze, die bevorzugt eine Temperatur von 180 bis 300 °C, besonders bevorzugt von 200 bis 270 °C aufweist, von Polyalkylenterephthalat, bevorzugt Polyethylenterephthalat oder Polybutylenterephthalat, besonders bevorzugt Polybutylenterephthalat, mit
C.2) 2 Gew.-% bis 30 Gew.-%, bevorzugt 7 Gew.-% bis 20 Gew.-% (bezogen auf die Summe der Gew.-% von C.1)+C.2)) mindestens einer Verbindung ausgewählt aus der Gruppe bestehend aus ortho-Phosphorsäure, Phosphorige Säure, Carbonsäureester der ortho-Phosphorsäure und Carbonsäureester der Phosphorigen Säure, wobei die Komponente C.2) als Feststoff oder in flüssiger Form eingesetzt wird,

in bekannter Weise vermischt werden, vorzugsweise bei Temperaturen von 180°C bis 320°C, besonders bevorzugt 200°C bis 270°C und vorzugsweise in Aggregaten wie Innenknetern, Extrudern und Doppelwellenschnecken (dieser Verfahrensschritt wird auch als "Schmelzcompoundierung" bezeichnet) und
(i-2) anschließend das erhaltene Gemisch schmelzextrudiert wird, wobei vorzugsweise das erhaltene Gemisch auf eine Temperatur von -20°C bis 100 °C, besonders bevorzugt von 10 bis 40°C abgekühlt wird, so dass das Gemisch (nachfolgend als "Konzentrat C)" bezeichnet) in fester Form erhalten wird, und

(ii) im zweiten Schritt

(ii-1) die Bestandteile ausgewählt aus der Gruppe enthaltend

A) 29,8 bis 82,8 Gew.-Teile, vorzugsweise 39,5 bis 89,5 Gew.-Teile, besonders bevorzugt 44,3 bis 74,3 Gew.-Teile (jeweils bezogen auf die Summe der Gewichtsteile der Komponenten A+B+C) aromatisches Polycarbonat,
B) 15 bis 70 Gew.-Teile, vorzugsweise 20 bis 60 Gew.-Teile, besonders bevorzugt 25 bis 55 Gew.-Teile (jeweils bezogen auf die Summe der Gewichtsteile der Komponenten A+B+C) Polyalkylenterephthalat,
C) 0,2 bis 5 Gew.-Teile, bevorzugt 0,5 bis 3 Gew.-Teile, besonders bevorzugt 0,7 bis 2 Gew.-Teile (jeweils bezogen auf die Summe der Gewichtsteile der Komponenten A+B+C) des nach Schritt (i) hergestellten Konzentrats C),
D) 0 bis 40 Gew.-Teile, bevorzugt 5 bis 30 Gew.-Teile, besonders bevorzugt 8 bis 18 Gew.-Teile (jeweils bezogen auf die Summe der Gewichtsteile der Komponenten A+B+C) kautschukmodifiziertes Pfropfpolymerisat, und
E) 0 bis 50 Gew.-Teile, bevorzugt 0,5 bis 25 Gew.-Teile (jeweils bezogen auf die Summe der Gewichtsteile der Komponenten A+B+C = 100) Zusatzstoffe

in bekannter Weise vermischt und
(ii-2) bei Temperaturen von 200°C bis 320°C, bevorzugt 240°C bis 300°C in üblichen Aggregaten wie Innenknetern, Extrudern und Doppelwellenschnecken schmelzcompoundiert und
(ii-3) anschließend schmelzextrudiert werden,

wobei alle Gewichtsteilangaben in der vorliegenden Anmeldung so normiert sind, dass die Summe der Gewichtsteile der Komponenten A+B+C in der Zusammensetzung 100 ergeben.

Ein weiterer Gegenstand der vorliegenden Erfindung ist die Verwendung des Konzentrats C) zur Verbesserung der Schmelzestabilität von Zusammensetzungen enthaltend aromatisches Polycarbonat und Polyalkylenterephthalat, gegebenenfalls kautschukmodifiziertes Pfropfpolymerisat und gegebenenfalls Zusatzstoffe.

Komponente A

Als Komponente A) enthalten die erfindungsgemäßen Zusammensetzungen erfindungsgemäß ein Polycarbonat oder eine Mischung von Polycarbonaten.

Bevorzugte Polycarbonate sind solche Homopolycarbonate und Copolycarbonate auf Basis der Bisphenole der allgemeinen Formel (I),

$$HO\text{-}Z\text{-}OH \qquad (I)$$

worin Z ein divalenter organischen Rest mit 6 bis 30 C-Atomen ist, der eine oder mehrere aromatische Gruppen enthält.

Bevorzugt sind Bisphenole der Formel (Ia)

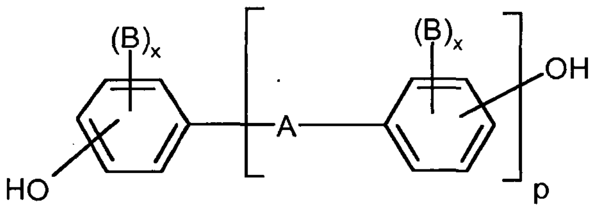

(Ia),

wobei

A eine Einfachbindung, $C_1$-$C_5$-Alkylen, $C_2$-$C_5$-Alkyliden, $C_5$-$C_6$-Cycloalkyliden, -O-, -SO-, -CO-, -S-, $-SO_2-$, $C_6$-$C_{12}$-Arylen, an das weitere aromatische gegebenenfalls Heteroatome enthaltende Ringe kondensiert sein können,

oder ein Rest der Formel (II) oder (III)

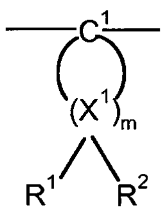

(II)

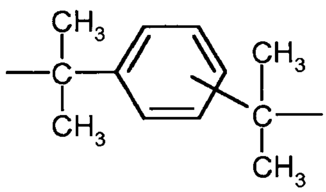

(III)

| | |
|---|---|
| B | jeweils $C_1$-$C_{12}$-Alkyl, vorzugsweise Methyl, Halogen, vorzugsweise Chlor und/oder Brom |
| x | jeweils unabhängig voneinander 0, 1 oder 2, |
| p | 1 oder 0 sind, und |
| $R^1$ und $R^2$ | für jedes $X^1$ individuell wählbar, unabhängig voneinander Wasserstoff oder $C_1$-$C_6$-Alkyl, vorzugsweise Wasserstoff, Methyl oder Ethyl, |
| $X^1$ | Kohlenstoff und |
| m | eine ganze Zahl von 4 bis 7, bevorzugt 4 oder 5 bedeuten, mit der Maßgabe, dass an mindestens einen Atom $X^1$, $R^1$ und $R^2$ gleichzeitig Alkyl sind. |

Beispiele für Bisphenole gemäß der allgemeinen Formel (I) sind Bisphenole, die zu den folgenden Gruppen gehören: Dihydroxydiphenyle, Bis-(hydroxyphenyl)-alkane, Bis-(hydroxyphenyl)-cycloalkane, Indanbisphenole, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide und α,α'-Bis-(hydroxyphenyl)-diisopropylbenzole.

Auch Derivate der genannten Bisphenole, die zum Beispiel durch Alkylierung oder Halogenierung an den aromatischen Ringen der genannten Bisphenole zugänglich sind, sind Beispiele für Bisphenole gemäß der allgemeinen Formel (I).

Beispiele für Bisphenole gemäß der allgemeinen Formel (I) sind insbesondere die folgenden Verbindungen: Hydrochinon, Resorcin, 4,4'-Dihydroxydiphenyl, Bis-(4 hydroxyphenyl)sulfid, Bis-(4-hydroxyphenyl)sulfon, Bis-(3,5-dimethyl-4-hydroxyphenyl)-methan, Bis-(3,5-dimethyl-4-hydroxyphenyl)-sulfon, 1,1-Bis-(3,5-dimethyl-4-hydroxyphenyl)-p/m-diisopropylbenzol, 1,1-Bis-(4-hydroxyphenyl)-1-phenyl-ethan, 1,1-Bis-(3,5-dimethyl-4-hydroxyphenyl)-cyclohexan, 1,1-Bis-(4-hydroxyphenyl)-3-methylcyclohexan, 1,1-Bis-(4-hydroxyphenyl)-3,3-dimethylcyclohexan, 1,1-Bis-(4-hydroxyphenyl)-4-methylcyclohexan. 1,1-Bis-(4-hydroxyphenyl)-cyclohexan, 1,1-Bis-(4-hydroxyphenyl)-3,3,5-trimethylcyclohexan, 2,2-Bis-(3,5-dichlor-4-hydroxyphenyl)-propan, 2,2-Bis-(3-methyl-4-hydroxyphenyl)-propan, 2,2-Bis-(3,5-dimethyl-4-hydroxyphenyl)-propan, 2,2-Bis-(4-hydroxyphenyl)-propan (d.h. Bisphenol A), 2,2-Bis-(3-chlor-4-hydroxyphenyl)-propan, 2,2-Bis-(3,5-dibrom-4-hydroxyphenyl)-propan, 2,4-Bis-(4-hydroxyphenyl)-2-methylbutan, 2,4-Bis-(3,5-dimethyl-4-hydroxyphenyl)-2-methylbutan, α,α'-Bis-(4-hydroxyphenyl)-o-diisopropylbenzol, α,α'-Bis-(4-hydroxyphenyl)-m-diisopropylbenzol (d. h. Bisphenol M), α,α'-Bis-(4-hydroxyphenyl)-p-diisopropylbenzol und Indanbisphenol.

Besonders bevorzugte Polycarbonate sind das Homopolycarbonat auf Basis von Bisphenol A, das Homopolycarbonat auf Basis von 1,1-Bis-(4-hydroxyphenyl)-3,3,5-trimethylcyclohexan und die Copolycarbonate auf Basis der beiden Monomere Bisphenol A und 1,1-Bis-(4-hydroxyphenyl)-3,3,5-trimethylcyclohexan.

Die beschriebenen Bisphenole gemäß der allgemeinen Formel (I) können nach bekannten Verfahren, z.B. aus den entsprechenden Phenolen und Ketonen, hergestellt werden.

Die genannten Bisphenole und Verfahren zu ihrer Herstellung sind zum Beispiel beschrieben in der Monographie H. Schnell, "Chemistry and Physics of Polycarbonates", Polymer Reviews, Band 9, S. 77-98, Interscience Publishers, New York, London, Sidney, 1964 und in US-A 3 028 635, in US-A 3 062 781, in US-A 2 999 835, in US-A 3 148 172, in US-A 2 991 273, in US-A 3 271 367, in US-A 4 982 014, in US-A 2 999 846, in DE-A 1 570 703, in DE-A 2 063 050, in DE-A 2 036 052, in DE-A 2 211 956, in DE-A 3 832 396, und in FR-A 1 561 518 sowie in den Japanischen Offenlegungsschriften mit den Anmeldenummern JP-A 62039 1986, JP-A 62040 1986 und JP-A 105550 1986.

1,1-Bis-(4-hydroxyphenyl)-3,3,5-trimethylcyclohexan und seine Herstellung ist z.B. beschrieben in US-A 4 982 014.

Indanbisphenole und ihre Herstellung sind zum Beispiel beschrieben in US-A 3 288 864, in JP-A 60 035 150 und in US-A 4 334 106. Indanbisphenole können zum Beispiel aus Isopropenylphenol oder dessen Derivaten oder aus Dimeren des Isopropenylphenols oder dessen Derivaten in Gegenwart eines Friedel-Craft-Katalysators in organischen Lösungsmitteln hergestellt werden.

Polycarbonate können nach bekannten Verfahren hergestellt werden. Geeignete Verfahren zur Herstellung von Polycarbonaten sind zum Beispiel die Herstellung aus Bisphenolen mit Phosgen nach dem Phasengrenzflächenverfahren oder aus Bisphenolen mit Phosgen nach dem Verfahren in homogener Phase, dem sogenannten Pyridinverfahren, oder aus Bisphenolen mit Kohlensäureestern nach dem Schmelzeumesterungsverfahren. Diese Herstellverfahren sind z.B. beschrieben in H. Schnell, "Chemistry and Physis of Polycarbonates", Polymer Reviews, Band 9, S. 31-76, Interscience Publishers, New York, London, Sidney, 1964. Die genannten Herstellverfahren sind auch beschrieben in D. Freitag, U. Grigo, P. R. Müller, H. Nouvertne, "Polycarbonates" in Encyclopedia of Polymer Science and Engineering, Volume 11, Second Edition, 1988, Seiten 648 bis 718 und in U. Grigo, K. Kircher und P.R. Müller "Polycarbonate" in Becker, Braun, Kunststoff-Handbuch, Band 3/1, Polycarbonate, Polyacetale, Polyester, Celluloseester, Carl Hanser Verlag München, Wien 1992, Seiten 117 bis 299 und in D.C. Prevorsek, B.T. Debona und Y. Kesten, Corporate Research Center, Allied Chemical Corporation, Morristown, New Jersey 07960, "Synthesis of Poly(estercarbonate) Copolymers" in Journal of Polymer Science, Polymer Chemistry Edition, Vol. 19, 75-90 (1980).

Das Schmelzeumesterungsverfahren ist insbesondere beispielsweise beschrieben in H. Schnell, "Chemistry and Physics of Polycarbonates", Polymer Reviews, Band 9, S. 44 bis 51, Interscience Publishers, New York, London, Sidney, 1964 sowie in DE-A 1 031 512.

Bei der Herstellung von Polycarbonat werden bevorzugt Rohstoffe und Hilfsstoffe mit einem geringen Grad an Verunreinigungen eingesetzt. Insbesondere bei der Herstellung nach dem Schmelzeumesterungsverfahren sollen die eingesetzten Bisphenole und die eingesetzten Kohlensäurederivate möglichst frei von Alkaliionen und Erdalkaliionen sein. Derart reine Rohstoffe sind zum Beispiel erhältlich, indem man die Kohlensäurederivate, zum Beispiel Kohlensäureester, und die Bisphenole umkristallisiert, wäscht oder destilliert.

Die erfindungsgemäß geeigneten Polycarbonate haben bevorzugt ein Gewichtsmittel der molaren Masse ($\overline{M}_w$), welches sich z.B. durch Ultrazentrifugation oder Streulichtmessung bestimmen lässt, von 10 000 bis 200 000 g/mol.

Besonders bevorzugt haben sie ein Gewichtsmittel der molaren Masse von 12 000 bis 80 000 g/mol, insbesondere bevorzugt 20 000 bis 35 000 g/mol.

Die mittlere molare Masse der erfindungsgemäßen Polycarbonate kann zum Beispiel in bekannter Weise durch eine entsprechende Menge an Kettenabbrechern eingestellt werden. Die Kettenabbrecher können einzeln oder als Mischung verschiedener Kettenabbrecher eingesetzt werden.

Geeignete Kettenabbrecher sind sowohl Monophenole als auch Monocarbonsäuren. Geeignete Monophenole sind z.B. Phenol, p-Chlorphenol, p-tert.-Butylphenol, Cumylphenol oder 2,4,6-Tribromphenol, sowie langkettige Alkylphenole, wie z.B. 4-(1,1,3,3-Tetramethylbutyl)-phenol oder Monoalkylphenole bzw. Dialkylphenole mit insgesamt 8 bis 20 C-Atomen in den Alkylsubstituenten wie z.B. 3,5-di-tert.-Butylphenol, p-tert.-Octylphenol, p-Dodecylphenol, 2-(3,5-Dimethyl-heptyl)-phenol oder 4-(3,5-Dimethyl-heptyl)-phenol. Geeignete Monocarbonsäuren sind Benzoesäure, Alkylbenzoesäuren und Halogenbenzoesäuren.

Bevorzugte Kettenabbrecher sind Phenol, p-tert.-Butylphenol, 4-(1,1,3,3-Tetramethylbutyl)-phenol und Cumylphenol.

Die Menge an Kettenabbrechern beträgt bevorzugt zwischen 0,25 und 10 Mol-%, bezogen auf die Summe der jeweils eingesetzten Bisphenole.

Die erfindungsgemäß geeigneten Polycarbonate können in bekannter Weise verzweigt sein, und zwar vorzugsweise durch den Einbau von trifunktionellen oder mehr als trifunktionellen Verzweigern. Geeignete Verzweiger sind z.B. solche mit drei oder mehr als drei phenolischen Gruppen oder solche mit drei oder mehr als drei Carbonsäuregruppen.

Geeignete Verzweiger sind beispielsweise Phloroglucin, 4,6-Dimethyl-2,4,6-tri-(4-hydroxyphenyl)-hepten-2, 4,6-Dimethyl-2,4,6-tri-(4-hydroxyphenyl)-heptan, 1,3,5-Tri-(4-hydroxyphenyl)-benzol, 1,1,1-Tris-(4-hydroxyphenyl)-ethan, Tri-(4-hydroxyphenyl)-phenylmethan, 2,2-Bis-[4,4-bis-(4-hydroxyphenyl)-cyclohexyl]-propan, 2,4-Bis-(4-hydroxyphenyl-isopropyl)-phenol, 2,6-Bis-(2-hydroxy-5'-methyl-benzyl)-4-methylphenol, 2-(4-Hydroxyphenyl)-2-(2,4-dihydroxyphenyl)-propan, Hexa-(4-(4-hydroxyphenyl-isopropyl)-phenyl)-terephthalsäureester, Tetra-(4-hydroxyphenyl)-methan, Tetra-(4-(4-hydroxyphenyl-isopropyl)-phenoxy)-methan und 1,4-Bis-(4',4"-dihydroxytriphenyl)-methylbenzol sowie 2,4-Dihydroxybenzoesäure, Trimesinsäure, Cyanurchlorid, 3,3-Bis-(3-methyl-4-hydroxyphenyl)-2-oxo-2,3-dihydroindol, Trimesinsäuretrichlorid und α,α'α"-Tris-(4-hydroxyphenol)-1,3,5-triisopropylbenzol.

Bevorzugte Verzweiger sind 1,1,1-Tris-(4-hydroxyphenyl)-ethan und 3,3-Bis-(3-methyl-4-hydroxyphenyl)-2-oxo-2,3-dihydroindol.

Die Menge der gegebenenfalls einzusetzenden Verzweiger beträgt bevorzugt 0,05 Mol-% bis 2 Mol-%, bezogen auf Mole an eingesetzten Bisphenolen.

Die Verzweiger können zum Beispiel im Falle der Herstellung des Polycarbonates nach dem Phasengrenzflächenverfahren mit den Bisphenolen und den Kettenabbrechern in der wässrig alkalischen Phase vorgelegt werden, oder in einem organischen Lösungsmittel gelöst zusammen mit den Kohlensäurederivaten zugegeben werden. Im Falle des Umesterungsverfahrens werden die Verzweiger bevorzugt zusammen mit den Dihydroxyaromaten oder Bisphenolen dosiert.

Bevorzugt einzusetzende Katalysatoren bei der Herstellung von Polycarbonat nach dem Schmelzeumesterungsverfahren sind die literaturbekannten Ammoniumsalze und Phosphoniumsalze (siehe beispielsweise US-A 3 442 864, JP-A-14742/72, US-A 5 399 659 und DE-A 19 539 290).

Copolycarbonate können auch verwendet werden. Copolycarbonate im Sinne der Erfindung sind insbesondere Polydiorganosiloxan-Polycarbonat-Blockcopolymere, deren Gewichtsmittel der molaren Masse ($\overline{M}_W$) bevorzugt 10 000 bis 200 000 g/mol, besonders bevorzugt 20 000 bis 80 000 g/mol beträgt (ermittelt durch Gelchromatographie nach vorheriger Eichung durch Lichtstreuungsmessung oder Ultrazentrifugation). Der Gehalt an aromatischen Carbonatstruktureinheiten in den Polydiorganosiloxan-Polycarbonat-Blockcopolymeren beträgt vorzugsweise 75 bis 97,5 Gew.-%, besonders bevorzugt 85 bis 97 Gew.-%. Der Gehalt an Polydiorganosiloxanstruktureinheiten in den Polydiorganosiloxan-Polycarbonat-Blockcopolymeren beträgt vorzugsweise 25 bis 2,5 Gew.-%, besonders bevorzugt 15 bis 3 Gew.-%. Die Polydiorganosiloxan-Polycarbonat-Blockcopolymeren können zum Beispiel ausgehend von α,ω-Bishydroxyaryloxyendgruppenhaltigen Polydiorganosiloxanen mit einem mittleren Polymerisationsgrad von bevorzugt $P_n$ = 5 bis 100, besonders bevorzugt $P_n$ = 20 bis 80, hergestellt werden.

Den Polycarbonaten könne übliche Additive wie z.B. Entformungsmittel in der Schmelze zugemischt oder auf der Oberfläche aufgebracht werden. Bevorzugt enthalten die verwendeten Polycarbonate bereits Entformungsmittel vor Compoundierung mit den anderen Komponenten der erfindungsgemäßen Formmassen.

**Komponente B**

Als Komponente B) enthalten die Zusammensetzungen erfindungsgemäß Polyalkylenterephthalat, wobei auch eine Mischung aus zwei oder mehreren unterschiedlichen Polyalkylenterephthalaten enthalten sein kann. Polyalkylenterephthalate im Sinne der Erfindung sind Polyalkylenterephthalate, die sich von Terephthalsäure (oder ihren reaktionsfähigen Derivaten) und Alkandiolen beispielsweise auf Basis von Propylenglycol oder Butandiol ableiten. Erfindungsgemäß werden als Komponente B) bevorzugt Polyethylenterephthalat, Polybutylenterephthalat und/oder Polytrimethylenterephthalat, am meisten bevorzugt Polybutylenterephthalat eingesetzt.

Polyalkylenterephthalate im Sinne der Erfindung sind Reaktionsprodukte aus aromatischen Dicarbonsäure oder ihren reaktionsfähigen Derivaten (z.B. Dimethylestern oder Anhydriden) und aliphatischen, cycloaliphatischen oder araliphatischen Diolen und Mischungen dieser Reaktionsprodukte.

Bevorzugte Polyalkylenterephthalate lassen sich aus Terephthalsäure (oder ihren reaktionsfähigen Derivaten) und aliphatischen oder cycloaliphatischen Diolen mit 2 bis 10 C-Atomen nach bekannten Methoden herstellen (Kunststoff-Handbuch, Bd. VIII, S. 695 FF, Karl-Hanser-Verlag, München 1973).

Bevorzugte Polyalkylenterephthalate enthalten mindestens 80, vorzugsweise 90 Mol.-%, bezogen auf die Dicarbonsäure, Terephthalsäurereste und mindestens 80, vorzugsweise mindestens 90 Mol.-%, bezogen auf die Diolkomponente, Ethylenglykol- und/oder Propandiol-1,3- und/oder Butandiol-1,4-reste.

Die bevorzugten Polyalkylenterephthalate können neben Terephthalsäureresten bis zu 20 Mol-% Reste anderer aromatischer Dicarbonsäuren mit 8 bis 14 C-Atomen oder aliphatischer Dicarbonsäuren mit 4 bis 12 C-Atomen enthalten, wie Reste von Phthalsäure, Isophthalsäure, Naphthalin-2,6-dicarbonsäure, 4,4'-Diphenyldicarbonsäure, Bernstein-, Adipin-, Sebacinsäure, Azelainsäure, Cyclohexandiessigsäure, Cyclohexandicarbonsäure.

Die bevorzugten Polyalkylenterephthalate können neben Ethylen- bzw. Propandiol-1,3- bzw. Butandiol-1,4-glykolresten bis zu 20 Mol.-% anderer aliphatischer Diole mit 3 bis 12 C-Atomen oder cycloaliphatischer Diole mit 6 bis 21 C-Atomen enthalten, z.B. Reste von Propandiol-1,3, 2-Ethylpropandiol-1,3, Neopentylglykol, Pentan-diol-1,5, Hexandiol-1.6, Cyclohexan-dimethanol-1,4, 3-Methylpentandiol-2,4, 2-Methylpentandiol-2,4, 2,2,4-Trimethylpentandiol-1,3 und -1,6,2-Ethylhexandiol-1,3 2,2-Diethylpropandiol-1,3, Hexandiol-2,5, 1,4-Di-(ß-hydroxyethoxy)-benzol, 2,2-Bis-(4-hydroxycyclohexyl)-propan, 2,4-Dihydroxy-1,1,3,3-tetramethyl-cyclobutan, 2,2-bis-(3-ß-hydroxyethoxyphenyl)-propan und 2,2-bis-(4-hydroxypropoxyphenyl)-propan (DE-A 24 07 674, 24 07 776, 27 15 932).

Die Polyalkylenterephthalate können durch Einbau relativ kleiner Mengen 3- oder 4-wertiger Alkohole oder 3- oder 4-basischer Carbonsäure, wie sie z.B. in der DE-A 19 00 270 und der US-A 3 692 744 beschrieben sind, verzweigt werden. Beispiele für bevorzugte Verzweigungsmittel sind Trimesinsäure, Trimellitsäure, Trimethylolethan und -propan und Pentaerythrit.

Es ist ratsam, nicht mehr als 1 Mol.-% des Verzweigungsmittels, bezogen auf die Säurekomponente, zu verwenden.

Besonders bevorzugt sind Polyalkylenterephthalate, die allein aus Terephthalsäure oder deren reaktionsfähigen Derivaten (z.B. deren Dialkylestern wie Dimethylterephthalat) und Ethylenglykol und/oder Propandiol-1,3 und/oder Butandiol-1,4 hergestellt worden sind (Polyethylen- und Polybutylenterephthalat), und Mischungen dieser Polyalkylenterephthalate.

Bevorzugte Polyalkylenterephthalate sind auch Copolyester, die aus mindestens zwei der obengenannten Säurekomponenten und/oder aus mindestens zwei der obengenannten Alkoholkomponenten hergestellt sind, besonders bevorzugte Copolyester sind Poly-(ethylenglykol/butandiol-1,4)-terephthalate.

Die Polyalkylenterephthalate besitzen im Allgemeinen eine intrinsische Viskosität von ca. 0,4 bis 1,5 dl/g, vorzugsweise 0,5 bis 1,3 dl/g. Die intrinsische Viskosität wird berechnet aus der bei verschiedenen Konzentrationen in einem geeigneten Lösungsmittel gemessenen Lösungsviskosität (siehe ASTM D-4603). Geeignete Lösungsmittel sind beispielsweise Dichloressigsäure, eine Mischung (1:1 Gew.-Teile) aus Phenol und *ortho*-Dichlorbenzol oder eine Mischung (1:1 Gew.-Teile) aus Phenol und Tetrachlorethan. Die intrinsische Viskosität ist die extrapolierte Viskosität bei einer Konzentration von "Null". Alternativ kann eine Viskositätszahl bestimmt warden nach ISO 1628-1.

Bevorzugt können die erfindungsgemäß hergestellten Polyester auch im Gemisch mit anderen Polyestern und/oder weiteren Polymeren eingesetzt werden. Besonders bevorzugt werden Gemische von Polyalkylenterephthalaten mit anderen Polyestern eingesetzt.

Den Polyestern können übliche Additive wie z.B. Entformungsmittel, Stabilisatoren und/oder Fließmittel in der Schmelze zugemischt oder auf der Oberfläche aufgebracht werden.

**Komponente C**

Als Komponente C) enthalten die erfindungsgemäßen Zusammensetzungen ein Konzentrat C), welches vorzugsweise aus

C.1) 98 Gew.-% bis 70 Gew.-%, bevorzugt 93 Gew.-% bis 80 Gew.-% (bezogen auf die Summe der Gew.-% von C.1)+C.2)) Polyalkylenterephthalat oder einer Mischung von mindestens zwei verschiedenen Polyalkylenterephthalaten und

C.2) 2 Gew.-% bis 30 Gew.-%, bevorzugt 7 Gew.-% bis 20 Gew.-% (bezogen auf die Summe der Gew.-% von C.1)+C.2)) mindestens einer Verbindung ausgewählt aus der Gruppe bestehend aus ortho-Phosphorsäure, Phosphorige Säure, Carbonsäureester der ortho-Phosphorsäure und Carbonsäureester der Phosphorigen Säure

besteht.

Als Komponente C.1) wird bevorzugt ein Polyalkylenterephthalat gemäß Komponente B) eingesetzt. Komponente C.1) ist besonders bevorzugt Polyethylenterephtalat oder Polybutylenterephthalat, insbesondere bevorzugt Polybutylenterephthalat.

In einer bevorzugten Ausführungsform wird als Komponente C.1) das gleiche Polyalkylenterephthalat wie als Komponente B) eingesetzt, oder, falls als Komponente B) eine Mischung aus mehreren Polyalkylenterephthalaten eingesetzt wird, handelt es sich bei Komponente C.1) um mindestens eine der Polyalkylenterephthalate, die in der Mischung gemäß Komponente B) enthalten sind.

Als Komponente C.2) wird bevorzugt mindestens eine Verbindung ausgewählt aus der Gruppe bestehend aus

C.2.1) Verbindung gemäß Formel (IV) (2-Carboxyethyl-1-phosphonsäure, CAS # 5962-42-5),

$$HO_2C\text{-}CH_2\text{-}CH_2\text{-}P(=O)(OH)_2 \qquad (IV)$$

C.2.2) Verbindung gemäß Formel (V) (3,9-bis[2,4-bis(1,1-Dimethylethyl)phenoxy]-2,4,8,10-tetraoxa-3,9-diphosphaspiro[5.5]undecan, CAS # 26741-53-7),

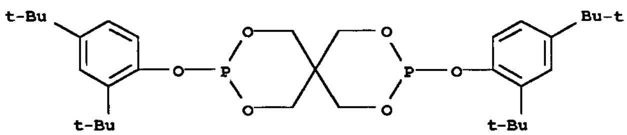

(V)

C.2.3) Verbindung gemäß Formel (VI) (2,4-bis(1,1-Dimethylethyl)-phenol-1,1',1"-phosphit, CAS # 31570-04-4),

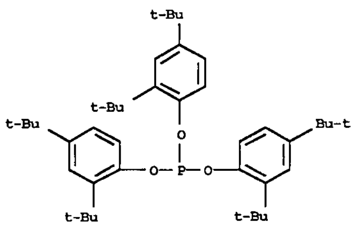

(VI)

C.2.4) *ortho*-Phosphorsäure gemäß Formel (VII) (CAS # 7664-38-2),

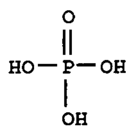

(VII)

C.2.5) Verbindung gemäß Formel (VIII) (P,P'-[[1,1'-biphenyl]-4,4'-diyl]bis-, P,P,P',P'-tetrakis[2,4-bis(1,1-dimethylethyl)phenyl]-phosphonsäureester, CAS # 38613-77-3)

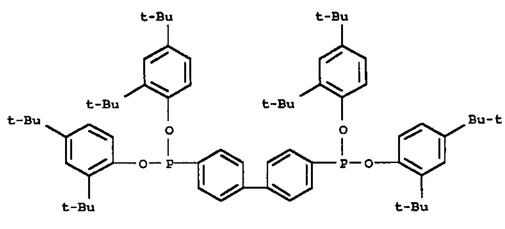

(VIII)

und
C.2.6) Phosphorigesäure $H_3PO_3$ (CAS # 10294-56-1)

eingesetzt.

Das Konzentrat C) wird hergestellt, wobei

(i-1) die Komponenten

C.1) 98 Gew.-% bis 70 Gew.-%, bevorzugt 93 Gew.-% bis 80 Gew.-% (bezogen auf die Summe der Gew.-% von C.1)+C.2)) einer Schmelze, die bevorzugt eine Temperatur von 180 bis 300 °C, besonders bevorzugt von 200 bis 270 °C aufweist, von Polyalkylenterephthalat, bevorzugt Polyethylenterephthalat oder Polybutylenterephthalat, besonders bevorzugt Polybutylenterephthalat, mit
C.2) 2 Gew.-% bis 30 Gew.-%, bevorzugt 7 Gew.-% bis 20 Gew.-% (bezogen auf die Summe der Gew.-% von C.1)+C.2)) mindestens einer Verbindung ausgewählt aus der Gruppe bestehend aus ortho-Phosphorsäure, Phosphorige Säure, Carbonsäureester der ortho-Phosphorsäure und Carbonsäureester der Phosphorigen Säure, wobei die Komponente C.2) als Feststoff oder in flüssiger Form eingesetzt wird,

in bekannter Weise vermischt werden, vorzugsweise bei Temperaturen von 180°C bis 320°C, besonders bevorzugt 200°C bis 270°C und vorzugsweise in Aggregaten wie Innenknetern, Extrudern und Doppelwellenschnecken (dieser Verfahrensschritt wird auch als "Schmelzcompoundierung" bezeichnet) und
(i-2) anschließend das erhaltene Gemisch schmelzextrudiert wird, wobei vorzugsweise das erhaltene Gemisch auf eine Temperatur von -20°C bis 100 °C, besonders bevorzugt von 10 bis 40°C abgekühlt wird, so dass das Konzentrat C in fester Form erhalten wird.

## Komponente D

Die Komponente B umfasst ein oder mehrere Pfropfpolymerisate von

D.1 5 bis 95, vorzugsweise 30 bis 90 Gew.-%, wenigstens eines Vinylmonomeren auf
D.2 95 bis 5, vorzugsweise 70 bis 10 Gew.-% wenigstens einer Pfropfgrundlage ausgewählt aus der Gruppe bestehend aus Dienkautschuke, EP(D)M-Kautschuke (d.h. solche auf Basis Ethylen/Propylen und gegebenenfalls Dien), Acrylat-, Polyurethan-, Silikon-, Silikonacrylat-, Chloropren und Ethylen/Vinylcetat-Kautschuke.

Die Pfropfgrundlage D.2 hat im Allgemeinen eine mittlere Teilchengröße ($d_{50}$-Wert) von 0,05 bis 10 $\mu$m, vorzugsweise 0,1 bis 5 $\mu$m, besonders bevorzugt 0,2 bis 1 $\mu$m.
Der Gelanteil der Pfropfgrundlage D.2 beträgt mindestens 20 Gew.-%, im Falle von im Emulsionspolymerisation hergestellten Pfropfgrundlagen D.2 vorzugsweise mindestens 40 Gew.-% (in Toluol gemessen).
Monomere D.1 sind vorzugsweise Gemische aus

D.1.1 50 bis 99 Gew.-Teilen Vinylaromaten und/oder kernsubstituierten Vinylaromaten (wie Styrol, $\alpha$-Methylstyrol, p-Methylstyrol, p-Chlorstyrol) und/oder (Meth)Acrylsäure-($C_1$-$C_8$)-Alkylester, wie Methylmethacrylat, Ethylmethacrylat), und
D.1.2 1 bis 50 Gew.-Teilen Vinylcyanide (ungesättigte Nitrile wie Acrylnitril und Methacrylnitril) und/oder (Meth)Acrylsäure-($C_1$-$C_8$)-Alkylester, wie Methylmethacrylat, n-Butylacrylat, t-Butylacrylat, und/oder Derivate (wie Anhydride und Imide) ungesättigter Carbonsäuren, beispielsweise Maleinsäureanhydrid und N-Phenyl-Maleinimid.

Bevorzugte Monomere D.1.1 sind ausgewählt aus mindestens einem der Monomere Styrol, $\alpha$-Methylstyrol und Methylmethacrylat, bevorzugte Monomere D.1.2 sind ausgewählt aus mindestens einem der Monomere Acrylnitril, Maleinsäureanhydrid und Methylmethacrylat. Besonders bevorzugte Monomere sind D.1.1 Styrol und D.1.2 Acrylnitril.
Bevorzugte Pfropfgrundlagen D.2 sind Acrylatkautschuke, Silikonacrylatkautschuke, Dienkautschuke (beispielsweise auf Basis Butadien und Isopren) oder Gemische von Dienkautschuken. Unter Dienkautschuke im erfindungsgemäßen Sinne sind auch Copolymerisate von Dienkautschuken oder deren Gemischen mit weiteren copolymerisierbaren Monomeren (z.B. gemäß D.1.1 und D.1.2) zu verstehen. Die Pfropfgrundlagen D.2 weisen im allgemeinen eine Glasübergangstemperatur von < 10°C, vorzugsweise < 0°C, besonders bevorzugt < -10°C auf.
Besonders bevorzugte Polymerisate D sind beispielsweise ABS-Polymerisate (Emulsions-, Masse-und Suspensions-ABS), wie sie z.B. in der DE-OS 2 035 390 (=US-PS 3 644 574) oder in der DE-OS 2 248 242 (=GB-PS 1 409 275) bzw. in Ullmanns, Enzyklopädie der Technischen Chemie, Bd. 19 (1980), S. 280 ff. beschrieben sind.
Vorzugsweise weist das Pfropfpolymerisat aus den Komponenten D.1 und D.2 eine Kern-Schale-Struktur auf,

wobei die Komponente D.1 die Schale bildet (auch als Hülle bezeichnet) und die Komponente D.2 den Kern ausbildet (siehe bspw. Ullmann's Encyclopedia of Industrial Chemistry, VCH-Verlag, Vol. A21, 1992, Seite 635 und Seite 656.

Die Pfropfcopolymerisate D werden durch radikalische Polymerisation, z.B. durch Emulsions-, Suspensions-, Lösungs- oder Massepolymerisation, vorzugsweise durch Emulsions- oder Massepolymerisation hergestellt.

Besonders geeignete Pfropfkautschuke sind auch ABS-Polymerisate, die im Emulsionspolymerisationsverfahren durch Redox-Initiierung mit einem Initiatorsystem aus organischem Hydroperoxid und Ascorbinsäure gemäß US-P 4 937 285 hergestellt werden.

Da bei der Pfropfreaktion die Pfropfmonomeren bekanntlich nicht unbedingt vollständig auf die Pfropfgrundlage aufgepfropft werden, werden erfindungsgemäß unter Pfropfpolymerisaten D auch solche Produkte verstanden, die durch (Co)Polymerisation der Pfropfmonomere in Gegenwart der Pfropfgrundlage gewonnen werden und bei der Aufarbeitung mit anfallen.

Geeignete Acrylatkautschuke gemäß D.2 der Polymerisate D sind vorzugsweise Polymerisate aus Acrylsäurealkylestern, gegebenenfalls mit bis zu 40 Gew.-%, bezogen auf D.2 anderen polymerisierbaren, ethylenisch ungesättigten Monomeren. Zu den bevorzugten polymerisierbaren Acrylsäureestern gehören $C_1$ bis $C_8$-Alkylester, beispielsweise Methyl-, Ethyl-, Butyl-, n-Octyl-und 2-Ethylhexylester; Halogenalkylester, vorzugsweise Halogen-$C_1$-$C_8$-alkylester, wie Chlorethylacrylat sowie Mischungen dieser Monomeren.

Zur Vernetzung können Monomere mit mehr als einer polymerisierbaren Doppelbindung copolymerisiert werden. Bevorzugte Beispiele für vernetzende Monomere sind Ester ungesättigter Monocarbonsäuren mit 3 bis 8 C-Atomen und ungesättigter einwertiger Alkohole mit 3 bis 12 C-Atomen, oder gesättigter Polyole mit 2 bis 4 OH-Gruppen und 2 bis 20 C-Atomen, wie Ethylenglykoldimethacrylat, Allylmethacrylat; mehrfach ungesättigte heterocyclische Verbindungen, wie Trivinyl- und Triallylcyanurat; polyfunktionelle Vinylverbindungen, wie Di-und Trivinylbenzole; aber auch Triallylphosphat und Diallylphthalat. Bevorzugte vernetzende Monomere sind Allylmethacrylat, Ethylenglykoldimethacrylat, Diallylphthalat und heterocyclische Verbindungen, die mindestens drei ethylenisch ungesättigte Gruppen aufweisen. Besonders bevorzugte vernetzende Monomere sind die cyclischen Monomere Triallylcyanurat, Triallylisocyanurat, Triacryloylhexahydro-s-triazin, Triallylbenzole. Die Menge der vernetzten Monomere beträgt vorzugsweise 0,02 bis 5, insbesondere 0,05 bis 2 Gew.-%, bezogen auf die Pfropfgrundlage D.2. Bei cyclischen vernetzenden Monomeren mit mindestens drei ethylenisch ungesättigten Gruppen ist es vorteilhaft, die Menge auf unter 1 Gew.-% der Pfropfgrundlage D.2 zu beschränken.

Bevorzugte "andere" polymerisierbare, ethylenisch ungesättigte Monomere, die neben den Acrylsäureestern gegebenenfalls zur Herstellung der Pfropfgrundlage D.2 dienen können, sind z.B. Acrylnitril, Styrol, $\alpha$-Methylstyrol, Acrylamide, Vinyl-$C_1$-$C_6$-alkylether, Methylmethacrylat, Butadien. Bevorzugte Acrylatkautschuke als Pfropfgrundlage D.2 sind Emulsionspolymerisate, die einen Gelgehalt von mindestens 60 Gew.-% aufweisen.

Geeignete Silikonkautschuke gemäß D.2. können durch Emulsionspolymerisation hergestellt werden, wie beispielsweise in US 2891920 und US 3294725 beschrieben. Weitere geeignete Pfropfgrundlagen gemäß D.2 sind Silikonkautschuke mit pfropfaktiven Stellen, wie sie in den DE-OS 3 704 657, DE-OS 3 704 655, DE-OS 3 631 540 und DE-OS 3 631 539 beschrieben werden.

Als Pfropfgrundlagen D.2 sind erfindungsgemäß auch Silikonacrylat-Kautschuke geeignet. Diese Silikonacrylat-Kautschuke sind Komposit-Kautschuke mit pfropfaktiven Stellen enthaltend 10 - 90 Gew.-% Silikonkautschuk-Anteil und 90 bis 10 Gew.-% Polyalkyl(meth)acrylatkautschuk-Anteil, wobei sich die beiden genannten Kautschuk-Komponenten im Komposit-Kautschuk gegenseitig durchdringen, so dass sie sich nicht wesentlich voneinander trennen lassen. Wenn im Komposit-Kautschuk der Anteil der Silikonkautschuk-Komponente zu hoch ist, haben die fertigen Harzzusammensetzungen nachteilige Oberflächeneigenschaften und eine verschlechterte Einfärbbarkeit. Wenn dagegen der Anteil der Polyalkyl(meth)acrylatkautschuk-Komponente im Komposit-Kautschuk zu hoch ist, wird die Schlagzähigkeit der fertigen Harzzusammensetzung nachteilig beeinflusst).Silikonacrylat-Kautschuke sind bekannt und beispielsweise beschrieben in US 5,807,914, EP 430134 und US 4888388. Vorzugsweise eingesetzt wird ein in Emulsionspolymerisation hergestelltes Pfropfpolymer mit D.1 Methylmetacrylat und D.2 Silikonacrylat-Komposit-Kautschuk.

Der Gelgehalt der Pfropfgrundlage D.2 wird bei 25°C in einem geeigneten Lösungsmittel bestimmt (M. Hoffmann, H. Krömer, R. Kuhn, Polymeranalytik I und II, Georg Thieme-Verlag, Stuttgart 1977).

Die mittlere Teilchengröße $d_{50}$ ist der Durchmesser, oberhalb und unterhalb dessen jeweils 50 Gew.% der Teilchen liegen. Er kann mittels Ultrazentrifugenmessung (W. Scholtan, H. Lange, Kolloid, Z. und Z. Polymere 250 (1972), 782-1796) bestimmt werden.

## Komponente E

Die Zusammensetzung kann weitere handelsübliche Zusatzstoffe gemäß Komponente E) wie Vinyl(Co)Polymerisate, Flammschutzmittel, Flammschutzsynergisten, Antidrippingmittel (beispielsweise Verbindungen der Substanzklassen der fluorierten Polyolefine, der Silikone sowie Aramidfasern), Gleit- und Entformungsmittel (beispielsweise Pentaerythrittetrastearat), Nukleiermittel, Stabilisatoren, Antistatika (beispielsweise Leitruße, Carbonfasern, Carbon Nanotubes sowie organische Antistatika wie Polyalkylenether, Alkyl-Sulfonate oder Polyamid-haltige Polymere), Säuren, Füll- und Verstärkungsstoffe (beispielsweise Glas- oder Karbonfasern, Glimmer, Kaolin, Talk, $CaCO_3$ und Glasschuppen) sowie Farbstoffe und Pigmente enthalten. Die fluorierten Polyolefine werden vorzugsweise in Form einer koagulierten Mischung von Emulsionen fluorierter Polyolefine mit Emulsionen eines Vinyl(Co)Polymerisats, besonders bevorzugt mit Emulsionen eines Copolymerisats auf Styrol-Acrylnitril-Basis eingesetzt

Als Vinyl(Co)Polymerisate sind Polymerisate von mindestens einem Monomeren aus der Gruppe der Vinylaromaten, Vinylcyanide (ungesättigte Nitrile), (Meth)Acrylsäure-($C_1$-$C_8$)-Alkylester, ungesättigte Carbonsäuren sowie Derivate (wie Anhydride und Imide) ungesättigter Carbonsäuren geeignet. Die Vinyl(co)polymerisate sind harzartig, thermoplastisch und kautschukfrei. Die Vinyl(co)polymerisate sind bekannt und lassen sich durch radikalische Polymerisation, insbesondere durch Emulsions-, Suspensions-, Lösungs- oder Massepolymerisation herstellen. Die Vinyl(co)polymerisate besitzen vorzugsweise mittlere Molekulargewichte Mw (Gewichtsmittel, ermittelt durch Lichtstreuung oder Sedimentation) zwischen 15.000 und 200.000. Insbesondere als Vinyl(Co)Polymerisate geeignet sind Polymerisate aus

E.1.1 50 bis 99, vorzugsweise 60 bis 80 Gew.-Teilen Vinylaromaten und/oder kernsubstituierten Vinylaromaten wie Styrol, $\alpha$-Methylstyrol, p-Methylstyrol, p-Chlorstyrol) und/oder (Meth)Acrylsäure-($C_1$-$C_8$)-Alkylester, wie Methylmethacrylat, Ethylmethacrylat), und

E.1.2 1 bis 50, vorzugsweise 20 bis 40 Gew.-Teilen Vinylcyanide (ungesättigte Nitrile) wie Acryl-nitril und Methacrylnitril und/oder (Meth)Acryl-säure-($C_1$-$C_8$)-Alkylester, wie Methylmeth-acrylat, n-Butylacrylat, t-Butylacrylat, und/oder ungesättigte Carbonsäuren, wie Maleinsäure, und/oder Derivate, wie Anhydride und Imide, ungesättigter Carbonsäuren, beispielsweise Maleinsäureanhydrid und N-Phenylmaleinimid).

## Herstellung der Formmassen und Formkörper

Gegenstand der Erfindung ist ein Verfahren zur Herstellung von Polycarbonat/ Polyalkylenterephthalat-Zusammensetzungen mit verbesserter Schmelzestabilität, welches eingangs beschrieben wurde. Die Vermischung der einzelnen Bestandteile im ersten bzw. im zweiten Verfahrensschritt kann in bekannter Weise sowohl sukzessive als auch simultan erfolgen, und zwar sowohl bei etwa 20°C (Raumtemperatur) als auch bei höherer Temperatur, vorzugsweise im ersten Schritt bei Temperaturen von 180°C bis 320°C, besonders bevorzugt 200°C bis 270°C bzw. im zweiten Schritt bei Temperaturen von 200°C bis 320°C, bevorzugt 240°C bis 300°C.

Gegenstand der Erfindung sind ebenfalls Verfahren zur Herstellung der Formmassen und die Verwendung der Formmassen zur Herstellung von Formkörpern sowie die Formteile selbst.

Die erfindungsgemäßen Formmassen können zur Herstellung von Formkörpern jeder Art verwendet werden. Diese können durch Spritzguss, Extrusion und Blasformverfahren hergestellt werden. Eine weitere Form der Verarbeitung ist die Herstellung von Formkörpern durch Tiefziehen aus zuvor hergestellten Platten oder Folien.

Beispiele für solche Formkörper sind Folien, Profile, Gehäuseteile jeder Art, z.B. für Haushaltsgeräte wie Fernsehgeräte, Saftpressen, Kaffeemaschinen, Mixer; für Büromaschinen wie Monitore, Flatscreens, Notebooks, Drucker, Kopierer; Platten, Rohre, Elektroinstallationskanäle, Fenster, Türen und weitere Profile für den Bausektor (Innenausbau und Außenanwendungen) sowie Elektro- und Elektronikteile wie Schalter, Stecker und Steckdosen sowie Karosserie- bzw. Innenbauteile für Nutzfahrzeuge, insbesondere für den Automobilbereich.

Insbesondere können die erfindungsgemäßen Formmassen beispielsweise auch zur Herstellung von folgenden Formkörpern oder Formteilen verwendet werden: Innenausbauteile für Schienenfahrzeuge, Schiffe, Flugzeuge, Busse und andere Kraftfahrzeuge, Gehäuse von Kleintransformatoren enthaltenden Elektrogeräten, Gehäuse für Geräte zur Informationsverarbeitung und -Übermittlung, Gehäuse und Verkleidung von medizinischen Geräten, Massagegeräte und Gehäuse dafür, Spielfahrzeuge für Kinder, flächige Wandelemente, Gehäuse für Sicherheitseinrichtungen und für Fernsehgeräte, wärmeisolierte Transportbehältnisse, Formteile für Sanitär- und Badausrüstungen, Abdeckgitter für Lüfteröffnungen und Gehäuse für Gartengeräte.

Die folgenden Beispiele dienen der weiteren Erläuterung der Erfindung.

## Beispiele

### Komponente A1:

Lineares Polycarbonat auf Basis Bisphenol A mit einer Viskosität eta(rel.) von 1,293 (Messbedingungen: 5 g Polycarbonat pro Liter Methylenchlorid, 25°C) und einem Molekulargewicht Mw von 29 208 $\pm$ 1036 g/mol (bestimmt mit GPC-Methoden gegen Polycarbonatstandard).

**Komponente A2:**

Lineares Polycarbonat auf Basis Bisphenol A mit einer Viskosität eta(rel.) von 1,280 (Messbedingungen: 5 g Polycarbonat pro Liter Methylenchlorid, 25°C) und einem Molekulargewicht Mw von 27 914 ± 1036 g/mol (bestimmt mit GPC-Methoden gegen Polycarbonatstandard).

**Komponente A3:**

Lineares Polycarbonat auf Basis Bisphenol A mit einer Viskosität eta(rel.) von 1,255 (Messbedingungen: 5 g Polycarbonat pro Liter Methylenchlorid, 25°C) und einem Molekulargewicht Mw von 24 289 ± 1036 g/mol (bestimmt mit GPC-Methoden gegen Polycarbonatstandard).

**Komponente B1:**

Polyethylenterephthalat, intrinsische Viskosität = 0,68 dl/g (Invista® RT 6012, Invista Resins and Fibers GmbH, Deutschland)

**Komponente B2:**

Polyethylenterephthalat, intrinsische Viskosität = 0,59 dl/g (Voridian® 21350, Eastman Chemical Co, USA)

**Komponente B3:**

Polybutylenterephthalat (Pocan® B1300, Lanxess AG, DE) mit Viskositätszahl von 105 $cm^3/g$.

**Komponente C:**

Das jeweilige Konzentrat C-I bis C-V (siehe nachfolgende Tabelle 1) wird hergestellt, wobei

(i-1) die Komponenten

C.1) 85 Gew.-% (bezogen auf die Summe der Gew.-% von C.1)+C.2)) einer Schmelze von Polyalkylenterephthalat B2 oder B3 (siehe Tabelle 1), die eine Temperatur von 225 °C aufweist, mit
C.2) 15 Gew.-% (bezogen auf die Summe der Gew.-% von C.1)+C.2)) einer Verbindung ausgewählt aus C.2.1 bis C.2.6, die als Feststoff bzw. in flüssiger Form eingesetzt wird,

bei einer Temperatur von 225°C bis 240°C auf einem Doppelwellenschnecke (ZSK-25, Coperion, USA) bei 225 U/min und einem Durchsatz von 10 bis 12 kg/h vermischt werden und
(i-2) anschließend das erhaltene Gemisch schmelzextrudiert wird, wobei das erhaltene Gemisch mit einem Wasserbad auf Raumtemperatur abgekühlt und granuliert wird.

Komponente C.2.1: Albriteet$^{e}$ PM2 (Rhodia, FR), Verbindung gemäß Formel (IV)

$$HO_2C - CH_2 - CH_2 - P(=O)(OH)_2 \qquad (IV)$$

Komponente C.2.2: Ultranox® 626A (Chemtura, USA), Verbindung gemäß Formel (V),

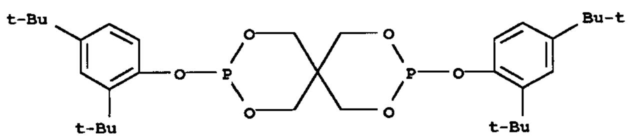

(V)

Komponente C.2.3: Irgafos® 168 (Ciba Specialty Chemicals, CH)Verbindung gemäß Formel (VI),

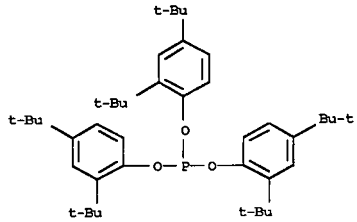

(VI)

Komponente C.2.4: *ortho*-Phosphorsäure $H_3PO_4$ (Fluka)

Komponente C.2.5: Irgafos® P-EPQ (Ciba Specialty Chemicals, CH)Verbindung gemäß Formel (VIII),

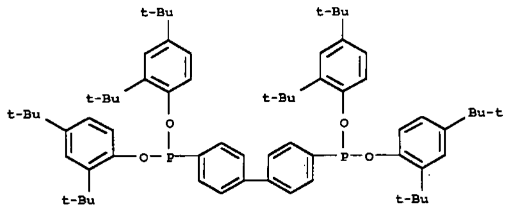

(VIII)

Komponente C.2.6: Phosphorige Säure, $H_3PO_3$

Tabelle 1: Zusammensetzung der Konzentrate C)

| [Gew.-%] | C-I | C-II | C-III | C-IV | C-V | C-VI | C-VII |
|---|---|---|---|---|---|---|---|
| C.1 | | | | | | | |
| B2 | | | | | | | 85 |
| B3 | 85 | 85 | 85 | 85 | 85 | 85 | |
| C.2 | | | | | | | |
| C.2.1 | 15 | | | | | | |
| C.2.2 | | 15 | | | | | 15 |
| C.2.3 | | | 15 | | | | |
| C.2.4 | | | | 15 | | | |
| C.2.5 | | | | | 15 | | |
| C.2.6 | | | | | | 15 | |

**Komponente D1:**

Schlagzähmodifikator mit Kern-Schale-Struktur, Kern: Polybutylacrylat, Hülle: = Polymethylmethacrylat (Paraloid® EXL 2300, Rohm and Haas, USA).

**Komponente D2:**

ABS mit Kern-Schale-Struktur hergestellt in Emulsionspolymerisation (Kern: Polybutadien-Kautschuk mit einer mittleren gewichtsgemittelten Teilchengröße $d_{50}$ = 375 nm, Hülle: Poly(Styrol-Acrylnitril), Gew.-Verhältnis Styrol:Acrylnitril = 73 : 27; das Gew.-Verhältnis von Polybutadien zu Poly(Styrol-Acrylnitril) beträgt 75 : 25).

**Komponente D3:**

Schlagzähmodifikator mit Kern-Schale-Struktur, Kern: Polybutadien, Hülle: = Polymethylmethacrylat (Paraloid® EXL 2650, Rohm and Haas, USA).

**Komponente E1:**

Talc, Naintsch® A3C (Fa. Rio Tinto)

**Komponente E2:**

Luwax® E (Montansäureester, BASF AG, Deutschland, CAS # 248600-35-3)

**Komponente E3:**

Pentaerythrittetrastearat

Die Schmelzviskosität wurde gemäß DIN 54811 oder ISO 11443bestimmt.

Die Schmelzestabilität der jeweiligen Zusammensetzung wird nach den folgenden Methoden beurteilt:

(1) Bestimmung des Unterschieds zwischen dem normalen MVR-Wert und dem "MVR + 19 min"-Wert:

Die thermoplastische Fließfähigkeit (MVR) (Schmelzvolumenfließrate) wird nach DIN EN ISO 1133 bestimmt. Hierzu werden zwei verschiedene Bestimmungsvarianten angewandt. Die "normale" Bestimmung des MVR-Wertes erfolgt bei einer Verweilzeit von 4 min in der Vorrichtung. - Die Bestimmung des "MVR + 19 min"-Wertes erfolgt bei einer Verweilzeit von 19 min in der Vorrichtung. Je kleiner der Betrag des Unterschied zwischen dem normalen MVR-Wert und dem "MVR + 19 min"-Wert ist (im Folgenden als "delta MVR" bezeichnet, Berechnung siehe nachfolgende Formel IX), desto höher (besser) ist die Schmelzestabilität der geprüften Zusammensetzung.

$$deltaMVR = \frac{[MVR + 19\min] - [MVR]}{[MVR]} \bullet 100\% \qquad \text{(IX)}$$

(2) Bestimmung des Unterschieds zwischen dem $T_m$-Wert des 3. Aufheizvorgangs zum $T_m$-Wert des 1. Aufheizvorgangs in der DSC-Messung:

In einem handelsüblichen Gerät zur Bestimmung der Schmelztemperatur mittels DSC (Differential Scanning Calorimetry) werden 0,01 bis 0,02 g der zu untersuchenden Zusammensetzung unter Stickstoffatmosphäre (bei 200mL/min abgeführt) von 25°C auf 300°C mit einem Gradienten von 10°C/min erhitzt, und nach Erreichen der Temperatur von 300°C auf 25°C mit einem Gradienten von -10°C/min abgekühlt. Dieser Vorgang wird noch zweimal wiederholt, so dass insgesamt die Zusammensetzung dreimal aufgeheizt und zweimal abgekühlt wurde. Während des Aufheizvorgangs, wird ein endothermes Signal aufgenommen, und es wird die Temperatur bestimmt, welche dem Maximum des endothermen Signals entspricht (im Folgenden als $T_m$ bezeichnet). Dieser $T_m$-Wert nimmt typischerweise ab mit jedem Aufheizvorgang: Je niedriger der Unterschied zwischen dem $T_m$-Wert des 2. bzw. 3. Aufheizvorgangs zum $T_m$-Wert des 1. Aufheizvorgangs ist (im Folgenden als "delta $T_m$(2 - 1)" bzw. "delta $T_m$(3 - 1)" bezeichnet, Berechnung siehe nachfolgende Formeln Xa bzw. Xb), desto höher (besser) ist die Schmelzestabilität der geprüften Zusammensetzung.

$$deltaT_m(2-1) = T_m(scan2) - T_m(scan1) \qquad \text{(Xa)}$$

$$deltaT_m(3-1) = T_m(scan3) - T_m(scan1) \qquad \text{(Xb)}$$

Die erfindungsgemäßen Zusammensetzungen (siehe nachfolgende Tabellen 2 bis 5) enthalten jeweils ein Konzentrat (Komponente C-I bis C-VII). Im Unterschied hierzu wird zur Herstellung der Vergleichsbeispiele kein Konzentrat verwendet, sondern die gesamten Bestandteile werden in einem Schritt miteinander vermischt.

Die erfindungsgemäßen füllstoffhaltige PC/PET-Formmassen (siehe Tabelle 2, Zusammensetzung **3** bzw **4**)

weisen eine höhere Schmelzestabilität (d.h. kleinerer Betrag des delta MVR-Wertes und/oder ein kleinerer Unterschied der $T_m$-Werte) als die entsprechenden Zusammensetzungen, die nicht mit einem Konzentrat aus C.2.1 bzw. C.2.2 und B3 hergestellt wurden (Vergleichsbeispiele **1** und 2).

Tabelle 2: Füllstoffhaltige PC/PET-Formmassen

| [Gew.-Teile] | **1 (Vgl.)** | **2 (Vgl.)** | **3** | **4** |
|---|---|---|---|---|
| A1 | 63,67 | 63,67 | 63,67 | 63,67 |
| B1 | 34,64 | 34,64 | 34,64 | 34,64 |
| B3 | 1,44 | 1,44 | | |
| C-I | | | 1,70 | |
| C-II | | | | 1,70 |
| C.2.1 | 0,26 | | | |
| C.2.2 | | 0,26 | | |
| D1 | 15,5 | 15,5 | 15,5 | 15,5 |
| E1 | 13,0 | 13,0 | 13,0 | 13,0 |
| E2 | 0,5 | 0,5 | 0,5 | 0,5 |
| Eigenschaften | | | | |
| MVR 280°C/5kg [$cm^3$/10min] | 33,60 | 22,66 | 34,03 | 28,20 |
| MVR 280°C/5kg + 19 min [$cm^3$/10min] | 50,48 | 16,33 | 42,66 | 32,62 |
| delta MVR [%] | (+50%) | (-28%) | (+25%) | (+16%) |
| DSC, $T_m$(scan 1) [°C] | 257,83 | 258,33 | 258,67 | 258,00 |
| DSC, $T_m$(scan 2) [°C] | 252,67 | 243,83 | 252,83 | 250,50 |
| delta $T_m$(2 - 1) [°C] | (-5,16) | (-14,50) | (-5,84) | (-7,50) |
| DSC, $T_m$ (scan 3) [°C] | 249,17 | 242,57 | 250,00 | 244,83 |
| delta $T_m$(3 - 1) [°C] | (-8,66) | (-15,76) | (-8,67) | (-13,17) |

Die erfindungsgemäßen schlagzähmodifizierten PC/PBT-Formmassen (siehe Tabelle 3, Zusammensetzung **5** bis **8**) weisen eine höhere Schmelzestabilität (d.h. kleinerer Betrag des delta MVR-Wertes sowie ein kleinerer Unterschied der $T_m$-Werte) als die entsprechenden Zusammensetzungen, die nicht mit einem Konzentrat hergestellt wurden (Vergleichsbeispiel **10**) oder gar keinen Phosphor-haltigen Stabilisator (Vergleichsbeispiel **9**).

Tabelle 3: schlagzähmodifizierte PC/PBT-Formmassen

| [Gew.-Teile] | **5** | **6** | **7** | **8** | **9 (Vgl.)** | **10 (Vgl.)** |
|---|---|---|---|---|---|---|
| A3 | 58,28 | 58,28 | 58,28 | 58,28 | 59,18 | 58,28 |
| B3 | 40,20 | 40,20 | 40,20 | 40,20 | 40,82 | 41,49 |
| C-I | 1,52 | | | | | |
| C-III | | 1,52 | | | | |
| C-IV | | | 1,52 | | | |
| C-V | | | | 1,52 | | |
| C.2.3 | | | | | | 0,23 |
| D2 | 16,3 | 16,3 | 16,3 | 16,3 | 16,6 | 16,3 |
| E3 | 0,2 | 0,2 | 0,2 | 0,2 | 0,2 | 0,2 |
| Eigenschaften | | | | | | |

(fortgesetzt)

| [Gew.-Teile] | **5** | **6** | **7** | **8** | **9 (Vgl.)** | **10 (Vgl.)** |
|---|---|---|---|---|---|---|
| MVR 260°C/5kg [$cm^3$/10min] | 22,71 | 30,01 | 33,27 | 30,25 | 30,04 | 28,59 |
| MVR 260°C/5kg + 19 min [$cm^3$/10min] | 20,32 | 25,37 | 26,24 | 20,37 | 16,37 | 16,47 |
| delta MVR [%] | (-11%) | (-15%) | (-21%) | (-33%) | (-46%) | (-42%) |
| DSC, $T_m$(scan 1) [°C] | 226,33 | 227,33 | 227 | 226,83 | 227,33 | 227,83 |
| DSC, $T_m$(scan 2) [°C] | 222,67 | 218 | 221,33 | 214,67 | 213,5 | 213,67 |
| delta $T_m$(2 - 1) [°C] | (-3,66) | (-9,33) | (-5,67) | (-12,16) | (-13,83) | (-14,16) |
| DSC, $T_m$ (scan 3) [°C] | 222,5 | 214,67 | 221 | 203,67 | 201,33 | 200,83 |
| delta $T_m$(3 - 1) [°C] | (-3,83) | (-12,66) | (-6,00) | (-23,16) | (-26,00) | (-27,00) |

Die erfindungsgemäße schlagzähmodifizierten PC/PBT-Formmassen (siehe Tabelle 4, Zusammensetzung **12**) weist eine höhere Schmelzestabilität (d.h. kleinerer Betrag des delta MVR-Wertes sowie ein kleinerer Unterschied der $T_m$-Werte) als die entsprechende Zusammensetzung, die nicht mit einem Konzentrat hergestellt wurde (Vergleichsbeispiel **11**).

Die erfindungsgemäßen schlagzähmodifizierten PC/PET-Formmassen (siehe Tabelle 5, Zusammensetzung **13**) weist eine höhere Schmelzestabilität (d.h. kleinerer Betrag des delta MVR-Wertes sowie ein kleinerer Unterschied der $T_m$-Werte) als die entsprechende Zusammensetzung, die nicht mit einem Konzentrat hergestellt wurden (Vergleichsbeispiel **14**).

Tabelle 4: schlagzähmodifizierte PC/PBT-Formmassen und PBT/$H_3PO_3$-Konzentrat

| [Gew.-Teile] | **11 (Vgl.)** | **12** |
|---|---|---|
| A2 | 49,97 | 49,97 |
| B3 | 49,97 | 49,67 |
| C-VI | | 0,36 |
| C.2.6 | 0,06 | |
| D3 | 11,1 | 11,1 |
| Eigenschaften | | |
| Schmelzviskosität (265°C / 500$s^{-1}$) | 330 | 322 |
| MVR 265°C/5,0 kg [$cm^3$/10min] | 33,22 | 35,43 |
| MVR 265°C/5,0 kg + 19 min [$cm^3$/10min] | 36,61 | 38,29 |
| delta MVR [%] | (+ 10%) | (+ 8%) |
| DSC, $T_m$(scan 1) [°C] | 227,17 | 226 |
| DSC, $T_m$(scan 2) [°C] | 223,5 | 223,5 |
| delta $T_m$(2 - 1) [°C] | (-3,67) | (-2,50) |
| DSC, $T_m$ (scan 3) [°C] | 223 | 223,17 |
| delta $T_m$(3 - 1) [°C] | (-4,17) | (-2,83) |

Tabelle 5: schlagzähmodifizierte PC/PET-Formmassen

| [Gew.-Teile] | **13** | **14 (Vgl.)** |
|---|---|---|
| A2 | 49,97 | 49,97 |
| B2 | 49,67 | 49,97 |

(fortgesetzt)

| [Gew.-Teile] | **13** | **14 (Vgl.)** |
|---|---|---|
| C-VII | 0,36 | |
| C.2.2 | | 0,06 |
| D3 | 11,1 | 11,1 |
| Eigenschaften | | |
| MVR 265°C/5,0 kg [$cm^3$/10min] | 42,2 | 37,25 |
| MVR 265°C/5,0 kg + 20min [$cm^3$/10min] | 27,77 | 20,9 |
| delta MVR [%] | (-34%) | (-44%) |
| DSC, $T_m$(scan 1) [°C] | 252,67 | 253,83 |
| DSC, $T_m$(scan 2) [°C] | 243,67 | 241,17 |
| delta $T_m$(2 - 1) [°C] | (-9,00) | (-12,66) |
| DSC, $T_m$ (scan 3) [°C] | 241,17 | 241,5 |
| delta $T_m$(3 - 1) [°C] | (-11,50) | (-12,33) |

**Patentansprüche**

1. Konzentrat C) bestehend aus

   C.1) 98 Gew.-% bis 70 Gew.% (bezogen auf die Summe der Gew.-% von C.1)+C.2)) Polyalkylenterephthalat oder einer Mischung von mindestens zwei Polyalkylen-terephthalaten, und
   C.2) 2 Gew.-% bis 30 Gew.-% (bezogen auf die Summe der Gew.% von C.1)+C.2)) mindestens einer Verbindung ausgewählt aus der Gruppe bestehend aus ortho-Phosphorsäure, Phosphorige Säure, Carbonsäureester der ortho-Phosphorsäure und Carbonsäureester der Phosphorigen Säure.

2. Konzentrat C) gemäß Anspruch 1 bestehend aus 93 Gew.% bis 80 Gew.% (bezogen auf die Summe der Gew.-% von C.1)+C.2)) an Komponente C.1) und 7 Gew.-% bis 20 Gew.-% (bezogen auf die Summe der Gew.-% von C.1)+C.2)) an Komponente C.2).

3. Konzentrat C) gemäß Anspruch 1 oder 2 enthaltend als Komponente C.2) mindestens eine Verbindung ausgewählt aus der Gruppe bestehend aus

   C.2.1) Verbindung gemäß Formel (IV)

   $$HO_2C\text{-}CH_2\text{-}CH_2\text{-}P(=O)(OH)_2 \qquad (IV)$$

   C.2.2) Verbindung gemäß Formel (V),

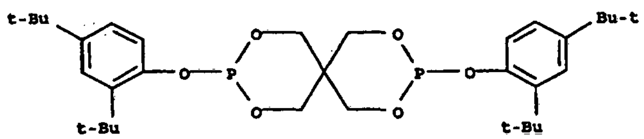

(V)

   C.2.3) Verbindung gemäß Formel (VI),

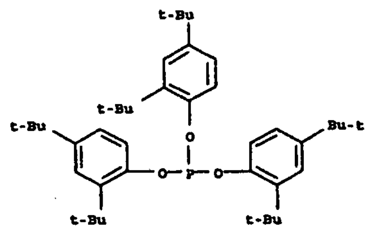

(VI)

C.2.4) *ortho*-Phosphorsäure $H_3PO_4$ (VII)
C.2.5) Verbindung gemäß Formel (VIII),

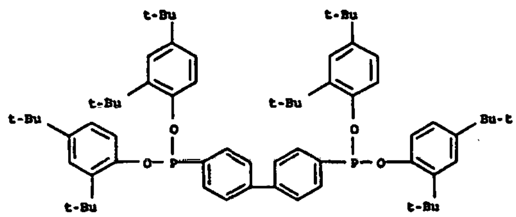

(VIII)

und
C.2.6) Phosphorige Säure $H_3PO_3$ (IX).

**4.** Zusammensetzung enthaltend

A) aromatisches Polycarbonat,
B) Polyalkylenterephthalat, und
C) ein Konzentrat C) gemäß einem der Ansprüche 1 bis 3.

**5.** Zusammensetzung gemäß Anspruch 4 enthaltend

A) 29,8 bis 82,8 Gew.-Teile (jeweils bezogen auf die Summe der Gewichtsteile der Komponenten A+B+C) aromatisches Polycarbonat,
B) 15 bis 70 Gew.-Teile (jeweils bezogen auf die Summe der Gewichtsteile der Komponenten A+B+C) Polyalkylenterephthalat,
C) 0,2 bis 5 Gew.-Teile (jeweils bezogen auf die Summe der Gewichtsteile der Komponenten A+B+C) eines Konzentrats C gemäß Anspruch 1 oder 2,
D) 0 bis 40 Gew.-Teile (jeweils bezogen auf die Summe der Gewichtsteile der Komponenten A+B+C) kautschukmodifiziertes Pfropfpolymerisat, und
E) 0 bis 20 Gew.-Teile (bezogen auf die Summe der Gewichtsteile der Komponenten A+B+C = 100) Zusatzstoffe.

**6.** Zusammensetzung gemäß Anspruch 5 enthaltend

A) 39,5 bis 89,5 Gew.-Teile (jeweils bezogen auf die Summe der Gewichtsteile der Komponenten A+B+C) aromatisches Polycarbonat,
B) 25 bis 55 Gew.-Teile (jeweils bezogen auf die Summe der Gewichtsteile der Komponenten A+B+C) Polyalkylenterephthalat,
C) 0,7 bis 2 Gew.-Teile (jeweils bezogen auf die Summe der Gewichtsteile der Komponenten A+B+C) eines Konzentrats C) gemäß Anspruch 2,
D) 8 bis 18 Gew.-Teile (jeweils bezogen auf die Summe der Gewichtsteile der Komponenten A+B+C) kautschukmodifiziertes Pfropfpolymerisat, und
E) 1 bis 15 Gew.-Teile (bezogen auf die Summe der Gewichtsteile der Komponenten A+B+C = 100) Zusatzstoffe.

**7.** Zusammensetzung gemäß einem der Ansprüche 1 bis 6 enthaltend als Komponente B Polybutylenterephthalat.

**8.** Verfahren zur Herstellung von Polycarbonat/ Polyalkylenterephthalat-Zusammensetzungen mit verbesserter Schmelzestabilität **dadurch gekennzeichnet, dass**

(i) im ersten Schritt ein Konzentrat C) hergestellt wird, wobei

(i-1) die Komponenten

C.1) 98 Gew.-% bis 70 Gew.% (bezogen auf die Summe der Gew.% von C.1)+C.2)) einer Schmelze von Polyalkylenterephthalat mit
C.2) 2 Gew.-% bis 30 Gew.-% (bezogen auf die Summe der Gew.-% von C.1)+C.2)) mindestens einer Verbindung ausgewählt aus der Gruppe bestehend aus ortho-Phosphorsäure, Phosphorige Säure, Carbonsäureester der ortho-Phosphorsäure und Carbonsäureester der Phosphorigen Säure, wobei die Komponente C.2) als Feststoff oder in flüssiger Form eingesetzt wird,

in bekannter Weise vermischt werden, und
(i-2) anschließend das erhaltene Gemisch schmelzextrudiert wird, und

(ii) im zweiten Schritt

(ii-1) die Bestandteile ausgewählt aus der Gruppe enthaltend

A) 29,8 bis 82,8 Gew.-Teile (jeweils bezogen auf die Summe der Gewichtsteile der Komponenten A+B+C) aromatisches Polycarbonat,
B) 15 bis 70 Gew.-Teile (jeweils bezogen auf die Summe der Gewichtsteile der Komponenten A+B+C) Polyalkylenterephthalat,
C) 0,2 bis 5 Gew.-Teile (jeweils bezogen auf die Summe der Gewichtsteile der Komponenten A+B+C) des nach Schritt (i) hergestellten Konzentrats C),
D) 0 bis 40 Gew.-Teile (jeweils bezogen auf die Summe der Gewichtsteile der Komponenten A+B+C) kautschukmodifiziertes Pfropfpolymerisat, und
E) 0 bis 50 Gew.-Teile (jeweils bezogen auf die Summe der Gewichtsteile der Komponenten A+B+C = 100) Zusatzstoffe

in bekannter Weise vermischt und
(ii-2) bei Temperaturen von 200°C bis 320°C, bevorzugt 240°C bis 300°C in üblichen Aggregaten wie Innenknetern, Extrudern und Doppelwellenschnecken schmelzcompoundiert und
(ii-3) anschließend schmelzextrudiert werden.

**9.** Verfahren gemäß Anspruch 8, wobei im Schritt (i-2) das erhaltene Gemisch auf eine Temperatur von -20°C bis 100 °C abgekühlt wird, so dass das Gemisch in fester Form erhalten wird.

**10.** Verfahren gemäß Anspruch 8 oder 9, wobei als Komponente B Polybutylenterephthalat eingesetzt wird.

**11.** Formteile und/oder Halbzeuge erhältlich nach dem Verfahren gemäß einem der Ansprüche 8 bis 10.

**12.** Verwendung des Konzentrats C) gemäß einem der Ansprüche 1 bis 3 zur Verbesserung der Schmelzestabilität von Zusammensetzungen enthaltend aromatisches Polycarbonat und Polyalkylenterephthalat.

**13.** Verwendung der Zusammensetzungen gemäß einem der Ansprüche 4 bis 7 zur Herstellung von Formteilen oder Halbzeugen.

**14.** Formkörper enthaltend eine Zusammensetzung gemäß einem der Ansprüche 4 bis 7 oder Formteile und/oder Halbzeuge gemäß Anspruch 11.

## Claims

**1.** Concentrate C) consisting of

C.1) from 98 wt.% to 70 wt.% (based on the sum of the wt.% of C.1)+C.2)) of polyalkylene terephthalate or a mixture of at least two polyalkylene terephthalates and
C.2) from 2 wt.% to 30 wt.% (based on the sum of the wt.% of C.1)+C.2)) of at least one compound selected

from the group consisting of ortho-phosphoric acid, phosphorous acid, carboxylic acid esters of ortho-phosphoric acid and carboxylic acid esters of phosphorous acid.

**2.** Concentrate C) according to claim 1 consisting of from 93 wt.% to 80 wt.% (based on the sum of the wt.% of C.1)+C.2)) of component C.1) and from 7 wt.% to 20 wt.% (based on the sum of the wt.% of C.1)+C.2)) of component C.2).

**3.** Concentrate C) according to claim 1 or 2 containing as component C.2) at least one compound selected from the group consisting of

C.2.1) compound of formula (IV)

$$HO_2C\text{-}CH2\text{-}CH_2\text{-}P(=O)(OH)_2 \qquad (IV)$$

C.2.2) compound of formula (V)

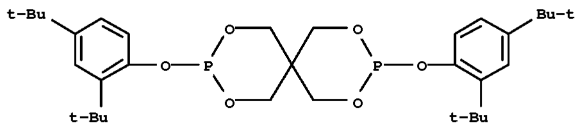

(V)

C.2.3) compound of formula (VI)

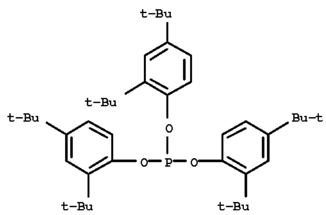

(VI)

C.2.4) *ortho*-phosphoric acid $H_3PO_4$ (VII)
C.2.5) compound of formula (VIII)

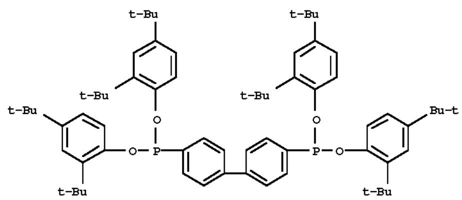

(VIII)

and
C.2.6) phosphorous acid $H_3PO_3$ (IX).

**4.** Composition comprising

A) aromatic polycarbonate,
B) polyalkylene terephthalate and
C) a concentrate C) according to any one of claims 1 to 3.

**5.** Composition according to claim 4 comprising

A) from 29.8 to 82.8 parts by weight (in each case based on the sum of the parts by weight of components A+B+C) of aromatic polycarbonate,
B) from 15 to 70 parts by weight (in each case based on the sum of the parts by weight of components A+B+C)

of polyalkylene terephthalate,
C) from 0.2 to 5 parts by weight (in each case based on the sum of the parts by weight of components A+B+C) of a concentrate C according to claim 1 or 2,
D) from 0 to 40 parts by weight (in each case based on the sum of the parts by weight of components A+B+C) of rubber-modified graft polymer and
E) from 0 to 20 parts by weight (based on the sum of the parts by weight of components A+B+C = 100) of additives.

**6.** Composition according to claim 5 comprising

A) from 39.5 to 89.5 parts by weight (in each case based on the sum of the parts by weight of components A+B+C) of aromatic polycarbonate,
B) from 25 to 55 parts by weight (in each case based on the sum of the parts by weight of components A+B+C) of polyalkylene terephthalate,
C) from 0.7 to 2 parts by weight (in each case based on the sum of the parts by weight of components A+B+C) of a concentrate C) according to claim 2,
D) from 8 to 18 parts by weight (in each case based on the sum of the parts by weight of components A+B+C) of rubber-modified graft polymer and
E) from 1 to 15 parts by weight (based on the sum of the parts by weight of components A+B+C = 100) of additives.

**7.** Composition according to any one of claims 1 to 6 comprising as component B polybutylene terephthalate.

**8.** Process for the preparation of polycarbonate/polyalkylene terephthalate compositions having improved melt stability, **characterised in that**

(i) in the first step a concentrate C) is prepared, wherein

(i-1) the components

C.1) from 98 wt.% to 70 wt.% (based on the sum of the wt.% of C.1)+C.2)) of a melt of polyalkylene terephthalate and
C.2) from 2 wt.% to 30 wt.% (based on the sum of the wt.% of C.1)+C.2)) of at least one compound selected from the group consisting of ortho-phosphoric acid, phosphorous acid, carboxylic acid esters of ortho-phosphoric acid and carboxylic acid esters of phosphorous acid, component C.2) being used in the form of a solid or in liquid form,

are mixed in a known manner and
(i-2) the resulting mixture is then melt extruded and

(ii) in the second step

(ii-1) the constituents selected from the group comprising

A) from 29.8 to 82.8 parts by weight (in each case based on the sum of the parts by weight of components A+B+C) of aromatic polycarbonate,
B) from 15 to 70 parts by weight (in each case based on the sum of the parts by weight of components A+B+C) of polyalkylene terephthalate,
C) from 0.2 to 5 parts by weight (in each case based on the sum of the parts by weight of components A+B+C) of the concentrate C) prepared according to step (i),
D) from 0 to 40 parts by weight (in each case based on the sum of the parts by weight of components A+B+C) of rubber-modified graft polymer and
E) from 0 to 50 parts by weight (in each case based on the sum of the parts by weight of components A+B+C = 100) of additives

are mixed in a known manner and
(ii-2) melt compounded at temperatures of from 200°C to 320°C, preferably from 240°C to 300°C, in conventional devices such as internal kneaders, extruders and twin-shaft screws and
(ii-3) are then melt extruded.

9. Process according to claim 8, wherein in step (i-2) the resulting mixture is cooled to a temperature of from -20°C to 100°C, so that the mixture is obtained in solid form.

10. Process according to claim 8 or 9, wherein there is used as component B polybutylene terephthalate.

11. Mouldings and/or semi-finished products obtainable by the process according to any one of claims 8 to 10.

12. Use of the concentrate C) according to any one of claims 1 to 3 for improving the melt stability of compositions containing aromatic polycarbonate and polyalkylene terephthalate.

13. Use of the compositions according to any one of claims 4 to 7 in the production of mouldings or semi-finished products.

14. Moulded body containing a composition according to any one of claims 4 to 7 or mouldings and/or semi-finished products according to claim 11.

## Revendications

1. Concentré C) constitué de

C.1) 98 % en poids à 70 % en poids (par rapport à la somme des % en poids de C.1)+C.2)) de poly(alkylène-téréphtalate) ou d'un mélange d'au moins deux poly(alkylène-téréphtalate)s, et
C.2) 2 % en poids à 30 % en poids (par rapport à la somme des % en poids de C.1)+C.2)) d'au moins un composé choisi dans le groupe constitué par l'acide ortho-phosphorique, l'acide phosphoreux, des esters carboxyliques de l'acide ortho-phosphorique et des esters carboxyliques de l'acide phosphoreux.

2. Concentré C) selon la revendication 1, constitué de de 93 % en poids à 80 % en poids (par rapport à la somme des % en poids de C.1)+C.2)) de composant C.1) et 7 % en poids à 20 % en poids (par rapport à la somme des % en poids de C.1)+C.2)) de composant C.2).

3. Concentré C) selon la revendication 1 ou 2, contenant comme composant C.2) au moins un composé choisi dans le groupe constitué par

C.2.1) un composé selon la formule (IV)

$$HO_2C\text{-}CH_2\text{-}CH_2\text{-}P(=O)(OH)_2 \qquad (IV)$$

C.2.2) un composé selon la formule (V),

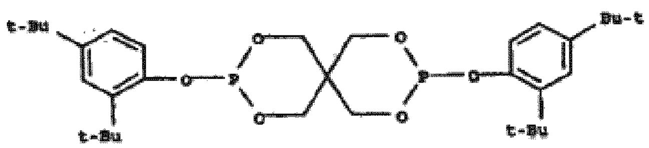

(V)

C.2.3) un composé selon la formule (VI),

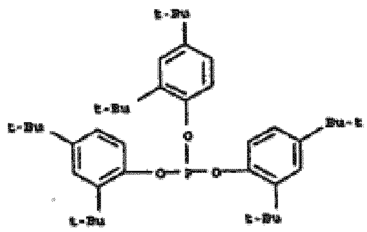

(VI)

C.2.4) l'acide *ortho*-phosphorique $H_3PO_4$ (VII)

C.2.5) un composé selon la formule (VIII),

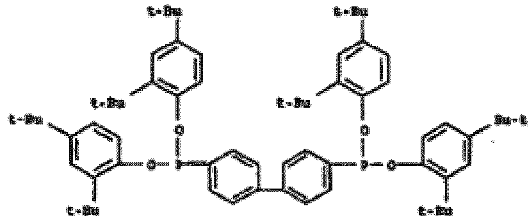

(VIII)

et

C.2.6) l'acide phosphoreux $H_3PO_3$ (IX).

4. Composition contenant

A) un polycarbonate aromatique,
B) un poly(alkylène-téréphtalate) et
C) un concentré C) selon l'une quelconque des revendications 1 à 3.

5. Composition selon la revendication 4, contenant

A) 29,8 à 82,8 parties en poids (chaque fois par rapport à la somme des parties en poids des composants A+B+C) de polycarbonate aromatique,
B) 15 à 70 parties en poids (chaque fois par rapport à la somme des parties en poids des composants A+B+C) de poly(alkylène-téréphtalate),
C) 0,2 à 5 parties en poids (chaque fois par rapport à la somme des parties en poids des composants A+B+C) d'un concentré C selon la revendication 1 ou 2,
D) 0 à 40 parties en poids (chaque fois par rapport à la somme des parties en poids des composants A+B+C) de polymérisat greffé modifié avec du caoutchouc et
E) 0 à 20 parties en poids (par rapport à la somme des parties en poids des composants A+B+C = 100) d'additifs.

6. Composition selon la revendication 5, contenant

A) 39,5 à 89,5 parties en poids (chaque fois par rapport à la somme des parties en poids des composants A+B+C) de polycarbonate aromatique,
B) 25 à 55 parties en poids (chaque fois par rapport à la somme des parties en poids des composants A+B+C) de poly(alkylène-téréphtalate),
C) 0,7 à 2 parties en poids (chaque fois par rapport à la somme des parties en poids des composants A+B+C) d'un concentré C) selon la revendication 2,
D) 8 à 18 parties en poids (chaque fois par rapport à la somme des parties en poids des composants A+B+C) de polymérisat greffé modifié avec du caoutchouc et
E) 1 à 15 parties en poids (par rapport à la somme des parties en poids des composants A+B+C = 100) d'additifs

7. Composition selon l'une quelconque des revendications 1 à 6, contenant en tant que composant B du poly(butylène-téréphtalate).

8. Procédé pour la préparation de compositions de polycarbonate/poly(alkylène-téréphtalate) à stabilité à chaud améliorée, **caractérisée en ce que**

(i) dans la première étape on prépare un concentré C),

(i-1) en mélangeant de façon connue les composants :

C.1) 98 % en poids à 70 % en poids (par rapport à la somme des % en poids de C.1)+C.2)) d'une masse fondue de poly(alkylène-téréphtalate) avec
C.2) 2 % en poids à 30 % en poids (par rapport à la somme des % en poids de C.1)+C.2)) d'au moins un composé choisi dans le groupe constitué par l'acide ortho-phosphorique, l'acide phosphoreux, des

esters carboxyliques de l'acide ortho-phosphorique et des esters carboxyliques de l'acide phosphoreux, le composant C.2) étant utilisé sous forme de solide ou sous forme liquide, et

(i-2) ensuite en extrudant à chaud le mélange obtenu, et

(ii) dans la deuxième étape

(ii-1) on mélange de façon connue les composants choisis dans le groupe contenant

A) 29,8 à 82,8 parties en poids (chaque fois par rapport à la somme des parties en poids des composants A+B+C) de polycarbonate aromatique,
B) 15 à 70 parties en poids (chaque fois par rapport à la somme des parties en poids des composants A+B+C) de poly(alkylène-téréphtalate),
C) 0,2 à 5 parties en poids (chaque fois par rapport à la somme des parties en poids des composants A+B+C) du concentré C) obtenu après l'étape (i),
D) 0 à 40 parties en poids (chaque fois par rapport à la somme des parties en poids des composants A+B+C) de polymérisat greffé modifié avec du caoutchouc et
E) 0 à 50 parties en poids (chaque fois par rapport à la somme des parties en poids des composants A+B+C = 100) d'additifs

et
(ii-2) on les soumet à un compoundage à chaud, à des températures de 200 °C à 320 °C, de préférence de 240 °C à 300 °C, dans des appareils usuels, tels que des malaxeurs internes, des extrudeuses et des vis à double arbre,
(ii-3) ensuite on les extrude à chaud.

**9.** Procédé selon la revendication 8, dans lequel on refroidit dans l'étape (i-2) le mélange obtenu, jusqu'à une température de -20 °C à 100 °C, de manière à obtenir le mélange sous forme solide.

**10.** Procédé selon la revendication 8 ou 9, dans lequel on utilise en tant que composant B du poly(butylène-téréphtalate).

**11.** Pièces moulés et/ou produits semi-finis, pouvant être obtenus conformément au procédé selon l'une quelconque des revendications 8 à 10.

**12.** Utilisation du concentré C) selon l'une quelconque des revendications 1 à 3, pour l'amélioration de la stabilité à chaud de compositions contenant un polycarbonate aromatique et un poly(alkylène-téréphtalate).

**13.** Utilisation des compositions selon l'une quelconque des revendications 4 à 7, pour la production de pièces moulés ou de produits semi-finis.

**14.** Corps moulé contenant une composition selon l'une quelconque des revendications 4 à 7 ou des pièces moulés et/ou des produits semi-finis selon la revendication 11.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 4066617 A
- WO 2004007607 A
- US 5744572 A
- US 20020137823 A
- US 6635698 B
- EP 0294862 A
- EP 0683200 A
- US 3028635 A
- US 3062781 A
- US 2999835 A
- US 3148172 A
- US 2991273 A
- US 3271367 A
- US 4982014 A
- US 2999846 A
- DE 1570703 A
- DE 2063050 A
- DE 2036052 A
- DE 2211956 A
- DE 3832396 A
- FR 1561518 A
- JP 61062039 A
- JP 61062040 A
- JP 61105550 A
- US 3288864 A
- JP 60035150 A
- US 4334106 A
- DE 1031512 A
- US 3442864 A
- JP 47014742 A
- US 5399659 A
- DE 19539290 A
- DE 2407674 A
- DE 2407776
- DE 2715932
- DE 1900270 A
- US 3692744 A
- DE OS2035390 A
- US PS3644574 A
- DE OS2248242 A
- GB PS1409275 A
- US 4937285 P
- US 2891920 A
- US 3294725 A
- DE OS3704657 A
- DE OS3704655 A
- DE OS3631540 A
- DE OS3631539 A
- US 5807914 A
- EP 430134 A
- US 4888388 A


### In der Beschreibung aufgeführte Nicht-Patentliteratur


- The role of phosphites in stabilization of non-polyolefin polymers. **ASHTON, HENRY C. ; ENLOW, WILLIAM ; NELEN, TIM., GE.** Annual Technical Conference - Society of Plastics Engineers. pecialty Chemicals, Inc, 2000, vol. 3, 2818-2825
- Division of Polymer Chemistry, National Chemical Laboratory. **JAMES, N. R. ; MAHAJAN, S. S. ; SIVARAM, S.** Transreactions in Condensation Polymers. Wiley-VCH Verlag GmbH, 1999, 219-265
- Chemistry and Physics of Polycarbonates. **MONOGRAPHIE H. SCHNELL.** Polymer Reviews. Interscience Publishers, 1964, vol. 9, 77-98
- Chemistry and Physis of Polycarbonates. **H. SCHNELL.** Polymer Reviews. Interscience Publishers, 1964, vol. 9, 31-76
- **D. FREITAG ; U. GRIGO ; P. R. MÜLLER ; H. NOUVERTNE.** Polycarbonates. Encyclopedia of Polymer Science and Engineering, 1988, vol. 11, 648-718
- Polycarbonate. **U. GRIGO ; K. KIRCHER ; P.R. MÜLLER.** Polycarbonate, Polyacetale, Polyester, Celluloseester. Carl Hanser Verlag, 1992, vol. 3/1, 117-299
- Synthesis of Poly(estercarbonate) Copolymers. **D.C. PREVORSEK ; B.T. DEBONA ; Y. KESTEN.** Journal of Polymer Science, Polymer Chemistry. Corporate Research Center, Allied Chemical Corporation, 1980, vol. 19, 75-90
- Chemistry and Physics of Polycarbonates. **H. SCHNELL.** Polymer Reviews. Interscience Publishers, 1964, vol. 9, 44-51
- Kunststoff-Handbuch. Karl-Hanser-Verlag, 1973, vol. VIII, 695

- **ULLMANNS.** Enzyklopädie der Technischen Chemie. 1980, vol. 19, 280
- Ullmann's Encyclopedia of Industrial Chemistry. VCH-Verlag, 1992, vol. A21, 635, , 656
- **M. HOFFMANN ; H. KRÖMER ; R. KUHN.** Polymeranalytik I und II. Georg Thieme-Verlag, 1977
- **W. SCHOLTAN ; H. LANGE.** *Kolloid, Z. und Z. Polymere,* 1972, vol. 250, 782-1796